# EUROPEAN PATENT SPECIFICATION

(11) **EP 2 370 518 B1**
(45) Date of publication and mention of the grant of the patent: **20.06.2018**
(21) Application number: 09795658.5
(22) Date of filing: 21.12.2009
(51) Int. Cl.: C08L 67/02, C08L 69/00

(54) **POLY(BUTYLENE TEREPHTHALATE) COMPOSITIONS, METHODS OF MANUFACTURE, AND ARTICLES THEREOF**
POLY (BUTYLENTEREPHTHALAT)-ZUSAMMENSETZUNGEN, VERFAHREN ZU DEREN HERSTELLUNG UND DARAUS HERGESTELLTE GEGENSTÄNDE
COMPOSITIONS DE POLY(BUTYLÈNE TÉRÉPHTALATE), PROCÉDÉS DE PRÉPARATION ET ARTICLES AINSI OBTENUS

(30) Priority: 30.12.2008 US 346280
(43) Date of publication of application: 05.10.2011
(73) Proprietor: SABIC Global Technologies B.V., 4612 PX Bergen op Zoom (NL)
(72) Inventor: COHOON-BRISTER, Kristen, Lutz Florida 33558 (US)
(74) Representative: Carpintero Lopez, Francisco
(86) International application number: PCT/US2009/069076
(87) International publication number: WO 2010/078124

(56) References cited:
- EP-A1- 1 227 075
- WO-A2-2007/087346
- DATABASE WPI Week 200245 Thomson Scientific, London, GB; AN 2002-420553 XP002577269 & JP 2002 060369 A (TEIJIN) 26 February 2002 (2002-02-26)

## Description

### BACKGROUND OF THE INVENTION

This disclosure relates to poly(butylene terephthalate) compositions and methods of manufacture thereof.

Thermoplastic molding compositions based on poly(butylene terephthalate) (PBT) are used in various applications. Although useful to many customers, conventional PBT molding compositions generally cannot be made from recycled sources of PBT due to the lack of availability of large post-consumer or post-industrial supplies of PBT scrap materials. Poly(ethylene terephthalate) (PET), unlike PBT, is made in much larger quantities and is more easily recovered from consumer wastes.

The increasing demand for conserving non-renewable resources and more effectively recycling underutilized scrap PET has increased interest in materials incorporating PBT produced from scrap PET, referred to as modified PBT. However, modified PBT compositions possessing desirable mechanical, thermal, and optical properties remain a challenge, particularly if secondary polymer components and/or impurities present in the PET are not separated prior to converting the PET to PBT. The current disclosure addresses the ongoing need for improved mechanical and thermal properties of modified PBT compositions.

### BRIEF DESCRIPTION OF THE INVENTION

A composition comprises, based on the total weight of the composition: from 5 to 90 wt.% of a modified poly(butylene terephthalate) copolymer, wherein (i) the modified poly(butylene terephthalate) copolymer is derived from a first polymer comprising a poly(ethylene terephthalate) component selected from the group consisting of poly(ethylene terephthalate) homopolymers, poly(ethylene terephthalate) copolymers, and combinations thereof, in the presence of a second polymer selected from the group consisting of polyvinyl chlorides, polyvinylidene chlorides, polyamides, polylactic acid, and combinations thereof, and wherein (ii) the modified poly(butylene terephthalate) copolymer comprises (a) at least one poly(ethylene terephthalate) component residue and (b) a member selected from the group consisting of (I) a second polymer selected from the group consisting of polyvinyl chlorides, polyvinylidene chlorides, polyamides, polylactic acid, and combinations thereof (II) at least one residue derived from the second polymer, and (III) combinations thereof; from 5 to 90 wt.% of a polycarbonate component; at least 1 wt.% of an impact modifier component, and optionally, from 0 to 5 wt.% of an additive.

A method for the manufacture of a composition comprises melt blending the components of the above-described composition.

Also disclosed are articles comprising the above-described compositions.

These and other features, aspects, and advantages of the present invention will become better understood with reference to the following description and appended claims.

### DETAILED DESCRIPTION OF THE INVENTION

Our invention is based on the discovery that it is now possible to make molding compositions containing modified poly(butylene terephthalate) copolymers from post consumer and postindustrial poly(ethylene terephthalate) sources that contain other polymers, such as polyvinyl chlorides, polyvinylidene chlorides, polyamides, polylactic acid. We have also discovered specific ranges of polyvinyl chlorides, polyvinylidene chlorides, polyamides, and polylactic that acid can be present so that compositions containing such materials exhibit preferred properties and are useful for commercial purposes. We have also discovered specific ranges/levels of polyvinyl chlorides, polyvinylidene chlorides, and polyamides that render the compositions unsuitable for commercial purposes.

Thermoplastic compositions are disclosed comprising a modified poly(butylene terephthalate) copolymer derived from a recycle poly(ethylene terephthalate) (PET) component comprising, in addition to PET homopolymer and/or PET copolymer, at least one second polymer, for example a polyvinyl chloride. In addition to the modified PBT component, the thermoplastic compositions further comprise a polycarbonate, an impact modifier, and an optional additive. The blend compositions have physical properties suitable for commercial molding applications, in particular flow viscosity, impact strength, and tensile strength. In some instances the modified PBT molding compositions display improved flow and mechanical properties compared to molding compositions comprising virgin PBT. Unlike conventional molding compositions containing virgin PBT (PBT prepared from monomers), the modified PBT compositions described herein contain a poly(ethylene terephthalate) residue, the second polymer from the recycle PET component, and/or a residue derived from the second polymer. Poly(ethylene terephthalate) residues include materials such as ethylene glycol and isophthalic acid groups (components that are not present in "virgin," monomer-based PBT). The compositions provide further incentive to utilize recycle post-consumer or post-industrial streams of scrap PET composites for PBT molding applications, without first separating the second polymer and/or impurities from the scrap PET, thus increasing conservation of non-renewable resources, and further reducing the formation of greenhouse gases, e.g., CO₂.

As used herein the singular forms "a," "an," and "the" include plural referents. The term "combination" is inclusive of blends, mixtures, alloys, reaction products, and the like. Unless defined otherwise, technical and scientific terms used herein have the same meaning as is commonly understood by one of skill. Compounds are described using standard nomenclature. The term "and a combination thereof" is inclusive of the named component and/or other components not specifically named that have essentially the same function.

The term "random copolymer," as used in this application refers to a copolymer that includes macromolecules in which the probability of finding a given monomeric unit at any given site in the chain is independent of the nature of the adjacent units.

Various numerical ranges are disclosed in this patent application. Because these ranges are continuous, they include every value between the minimum and maximum values. The endpoints of all ranges reciting the same characteristic or component are independently combinable and inclusive of the recited endpoint. Unless expressly indicated otherwise, the various numerical ranges specified in this application are approximations. The term "from more than 0 to" an amount means that the named component is present in some amount more than 0, and up to and including the higher named amount.

All ASTM tests and data are from the 2003 edition of the Annual Book of ASTM Standards unless otherwise indicated.

With respect to the terms "terephthalic acid group," "isophthalic acid group," "ethylene glycol group," "butanediol group," and "diethylene glycol group" being used to indicate, for example, the weight percent (wt.%) of the group in a molecule, the term "isophthalic acid group(s)" means the group or residue of isophthalic acid having the formula (-O(CO)C₆H₄(CO)-), the term "terephthalic acid group" means the group or residue of isophthalic acid having the formula (-O(CO)C₆H₄(CO)-), the term "diethylene glycol group" means the group or residue of diethylene glycol having the formula (-O(C₂H₄)O(C₂H₄)-), the term "butanediol group" means the group or residue of butanediol having the formula (-O(C₄H₈)-), and the term "ethylene glycol group" means the group or residue of ethylene glycol having the formula (-O(C₂H₄)-).

In general, the modified PBT copolymer (which can also be referred to as PET-modified PBT, or PET-derived PBT) is made by a process wherein the PET component is depolymerized in the presence of 1,4-butanediol and at least one second polymer selected from polyvinyl chloride, a polyvinylidene chloride, a polyamide, a polylactic acid, or a combination thereof, followed by polymerization of the depolymerized PET component with 1,4-butanediol, and a catalyst.

The PET component from which the modified PBT copolymer is made can be in a variety of forms. Generally, the PET component includes recycle (scrap) PET in flake, powder/chip, film, or pellet form. Before use, the PET is generally processed to remove secondary polymer components and/or impurities such as paper, adhesives, polyolefin, e.g., polypropylene, polyvinyl chloride (PVC), nylon, polylactic acid (an aliphatic polyester), and other contaminants. However, the examples herein demonstrate that a second polymer, for example polyvinyl chloride, polyvinylidene chloride, nylons, polylactic acid, and other polymer contaminants can be present during the process of converting recycle PET to modified PBT, without significantly adversely affecting the physical properties of the compositions formed with the modified PBT. Also, the PET component can include PET that is not waste in flake, chip, or pellet form. As such, PET that would ordinarily be deposited in landfills can now be used productively and effectively. Further, the PET component can also include other polyesters and/or polyester copolymers derived from aromatic dicarboxylic acids. Examples of such materials include poly(alkylene terephthalate)s such as poly(ethylene terephthalate), poly(cyclohexanedimethylene terephthalate), copolyesters of terephthalate esters with comonomers containing cyclohexanedimethanol and ethylene glycol, copolyesters of terephthalic acid with comonomers containing cyclohexanedimethanol and ethylene glycol, poly(butylene terephthalate), poly(xylylene terephthalate), poly(dianol terephthalate)s, poly(trimethylene terephthalate), polyester naphthalates, and combinations thereof.

The 1,4-butanediol used in the manufacture of the modified PBT copolymer component can be derived all or in part from a biomass, e.g., a corn-derived 1,4-butanediol or a 1,4-butanediol derived from a cellulosic material. The term "biomass" means living or dead biological matter that can be directly or subsequently converted to useful chemical substances that are ordinarily derived from non-renewable hydrocarbon sources. Biomass can include cellulosic materials, grains, starches derived from grains, fatty acids, plant-based oils, among others. When this embodiment is used, the manufacture of compositions containing the modified poly(butylene terephthalate) can further reduce CO₂ emissions that are ordinary generated when PBT is made from fossil fuel derived monomers. Also, this further reduces the amount of non-renewable hydrocarbon sources that are used in order to make the PBT.

In one process for the manufacture of the modified PBT copolymer, the PET component is (a) depolymerized in the presence of 1,4-butanediol, a catalyst, and at least one second polymer selected from the group consisting of polyvinyl chloride, polyvinylidene chloride, nylon, polylactic acid, and a combination thereof. The depolymerization step provides a molten mixture of oligomers containing ethylene terephthalate groups, oligomers containing ethylene isophthalate groups, oligomers containing diethylene terephthalate groups, oligomers containing diethylene isophthalate groups, oligomers containing butylene terephthalate groups, oligomers containing butylene isophthalate groups, and covalently bonded oligomeric moieties containing at least two of the foregoing groups. Suitable conditions for effecting the depolymerization include a pressure that is at least atmospheric pressure; and a temperature from 180°C to 230°C. The depolymerization mixture can optionally be agitated under an inert atmosphere. As such, our process converts poly(ethylene terephthalate) waste, e.g., the PET component to the modified poly(butylene terephthalate) copolymer by breaking down the poly(ethylene terephthalate) to its constituent monomers, or oligomers.

In a subsequent step (b), the temperature of the molten mixture is raised, and the pressure is decreased to subatmospheric pressure, to form the modified PBT copolymer, comprising polyester units selected from the following formulas (1), (2), (3), (4): 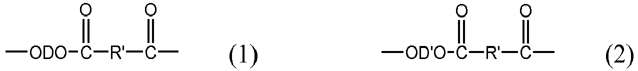 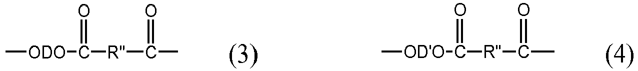 wherein D is a 1,4-butylene (-(C₄H₈)-); D' is ethylene (-(C₂H₄)-); R' is terephthalylene (-1,4-(C₆H₄)-); and R" is an isophthalylene (-1,3-(C₆H₄)-).

The 1,4-butanediol can be continuously refluxed back into the reactor during the depolymerization. In one embodiment, 1,4-butanediol is refluxed back into the reactor during the depolymerization (step(a)). In another embodiment, excess 1,4-butanediol, ethylene glycol, and tetrahydrofuran are removed during the polymerization (step(b)).

The PET component and the 1,4-butanediol component are generally combined under atmospheric pressure. It is also possible to use pressures that are higher than atmospheric pressures, for example 100 kPa to 500 kPa absolute. For instance, in one embodiment, the pressure at which the PET component and the 1,4-butanediol are subjected to is 200 kPa (2 atmospheres), or higher. With higher pressures, depolymerization can occur at temperatures higher than 230°C.

The temperature at which the PET component, the 1,4-butanediol, and the at least one second polymer are combined and reacted is sufficient to promote depolymerization of the PET component into components such as poly(ethylene terephthalate) and poly(butylene terephthalate) oligomers, 1,4-butanediol, and ethylene glycol. More particularly, the PET component is depolymerized into oligomers containing ethylene terephthalate groups, oligomers containing ethylene isophthalate groups, oligomers containing diethylene terephthalate groups, oligomers containing diethylene isophthalate groups, oligomers containing butylene terephthalate groups, oligomers containing butylene isophthalate groups, and covalently bonded oligomeric moieties containing at least two of the foregoing moieties. The temperature at which the PET component and the 1,4-butanediol component are combined is generally from 180°C to 230°C.

The 1,4-butanediol is generally used in excess amount relative to the PET component. In one embodiment, 1,4-butanediol is used in a molar excess amount from 2 to 20, based on the moles of poly(ethylene terephthalate) repeating unit.

During the initial stage of the process when the PET component and the 1,4-butanediol are combined and reacted (step (a)), the PET component depolymerizes into a molten mixture. As described above, the molten mixture contains at least poly(ethylene terephthalate) and poly(butylene terephthalate) oligomers, 1,4-butanediol, and ethylene glycol. The 1,4-butanediol and ethylene glycol are generally recirculated, and tetrahydrofuran is distilled off during this step of the process. In one embodiment, the PET component can also be depolymerized with ethylene glycol or propanediol instead of butanediol.

The duration of the depolymerization step is at least 30 minutes, depending on factors such as the equipment used, production needs, desired final properties, and the like. In one embodiment, the depolymerization step is carried out in at least 2 hours. In another embodiment, the depolymerization step is carried out in from 2 to 5 hours.

The process further includes the step of polymerizing the molten mixture at subatmospheric pressure and at an increased temperature of at least 230°C, more particularly 230°C to 260°C, thereby forming the modified PBT copolymer derived from the PET component (step (b)).

Generally, the molten mixture is subjected to a second pressure lower than the first pressure. In one embodiment, the first pressure is reduced to a second pressure of 13.3 kPa to 0.0067 kPa in a continuous manner. In another embodiment, the first pressure is reduced to a second pressure of 1.33 kPa to 0.0134 kPa in a continuous fashion. More particularly the second pressure is less than 0.3 kPa absolute. Advantageously, the molten mixture can be placed under subatmospheric conditions without isolation and dissolution of any material from the molten mixture. The avoidance of this step greatly enhances the utility of the process. The polymerization is conducted with agitation and under an inert atmosphere.

The temperature at which the molten mixture is placed under subatmospheric conditions is sufficiently high to promote polymerization of the oligomers (e.g., oligomers containing ethylene terephthalate groups, oligomers containing ethylene isophthalate groups, oligomers containing diethylene terephthalate groups, oligomers containing diethylene isophthalate groups, oligomers containing butylene terephthalate groups, oligomers containing butylene isophthalate groups, and covalently bonded oligomeric moieties containing at least two of the foregoing moieties), 1,4-butanediol, and ethylene glycol. More specifically, the temperature is 230°C to 260°C.

During the step when the molten mixture is placed under subatmospheric conditions and the temperature is increased, excess 1,4-butanediol, ethylene glycol, and tetrahydrofuran (THF) can be removed from the reactor and oligomers are allowed to build in molecular weight. Agitation can be continuously provided to facilitate the removal of the low boiling components. After sufficient molecular weight is obtained, the resulting molten PBT polymer is dropped from the reactor, cooled, stranded, and chopped into pellets.

The duration of the step in which the molten mixture polymerizes from mixture of oligomers, 1,4-butanediol, and ethylene glycol can vary, depending on factors such as the equipment used, production needs, desired final properties, and the like. In one embodiment, the polymerization is carried out for at least 60 minutes. In another embodiment, the polymerization step is carried out from 2 to 5 hours. The resulting mixture comprises modified PBT and at least one poly(ethylene terephthalate) component residue. The modified PBT further comprises the at least one second polymer, at least one residue derived from the second polymer, or a combination thereof.

Both steps of the process can be carried out in the same reactor. In one embodiment, however, the process is carried out in at least two separate reactors, where step (a) is carried out in a first reactor and when the molten mixture has formed, the molten mixture is placed in a second reactor and step (b) is carried out. In another embodiment, the process can be carried out in more than two reactors. In another embodiment, the process can be carried out in a continuous series of reactors.

A catalyst can be used to facilitate the reaction. Exemplary catalysts include antimony compounds, tin compounds, titanium compounds, combinations thereof as well as many other metal catalysts and combinations of metal catalysts that have been disclosed in the literature. The amount of the catalyst will vary depending on the specific reaction components and conditions, and can be from 1 to 5000 ppm, or more. The catalyst component is generally added in step (a), during the initial combining of the PET component, the 1,4-butanediol, and the ionic monomer. In another embodiment, the catalyst component can be added to the molten mixture that forms after the PET component and the 1,4-butanediol are combined and reacted. The catalyst can also be added during both the depolymerization and polymerization steps.

The process for making the modified PBT copolymer is preferably carried out under agitative conditions. The term "agitative conditions" or "agitation" refers to subjecting the PET component, the at least one second polymer, and the 1,4-butanediol to conditions that involve physically mixing the PET component, the at least one second polymer, and 1,4-butanediol and that promote the depolymerization of the PET in step (a), and/or subjecting the molten mixture to conditions that involve physically mixing the molten mixture to promote polymerization to form the modified PBT from the mixture of oligomers, 1,4-butanediol, and ethylene glycol in step (b). The physical mixing can be accomplished by methods known in the art. In one embodiment, a mixer containing rotating shaft and blades that are perpendicular to the shaft is used.

The process can include a step that reduces the amount of THF produced during the process by adding a basic compound containing an alkali metal to the reactor in the depolymerization step (a), polymerization step (b), or combination thereof, and thereby reducing formation of THF. The basic compound contains an alkali metal and can be, for example, sodium alkoxides, sodium hydroxide, sodium acetate, sodium carbonate, sodium bicarbonates, potassium alkoxides, potassium hydroxide, potassium acetate, potassium carbonate, potassium bicarbonate, lithium alkoxides, lithium hydroxide, lithium acetate, lithium carbonate, lithium bicarbonate, calcium alkoxides, calcium hydroxide, calcium acetate, calcium carbonate, calcium bicarbonates, magnesium alkoxides, magnesium hydroxide, magnesium acetate, magnesium carbonate, magnesium bicarbonates, aluminum alkoxides, aluminum hydroxide, aluminum acetate, aluminum carbonate, aluminum bicarbonates, and combinations thereof. The amount of the basic compound added to a mixture is generally at least 0.1 ppm, specifically from 0.1 to 50 ppm, more specifically from 1 to 10 ppm, each based on the parts by weight of the modified poly(1,4-butylene terephthalate) copolymer. The addition of the basic compound containing an alkali metal can reduce the amount of total THF production, as compared to when the process is carried out without the basic compound. In one embodiment, the total THF produced during the process is reduced by at least 10%, as compared to a process that does not use the basic compound. In another embodiment, the total THF produced during the process is reduced ranges from at least 10% to 50%, or more. In another embodiment, the THF is reduced from at least 10% to 50%.

A difunctional epoxy compound can optionally be added to reduce the formation of THF. The epoxy compounds may be selected from the group of difunctional epoxies. Examples of suitable difunctional epoxy compounds include 3,4-epoxycyclohexyl-3,4-epoxycyclohexyl carboxylate, bis(3,4-epoxycyclohexylmethyl) adipate, vinylcyclohexene di-epoxide, bisphenol diglycidyl ethers such as bisphenol-A diglycidyl ether, tetrabromobisphenol-A diglycidyl ether, glycidol, diglycidyl adducts of amines and amides, diglycidyl adducts of carboxylic acids such as the diglycidyl ester of phthalic acid the diglycidyl ester of hexahydrophthalic acid, and bis(3,4-epoxy-6-methylcyclohexylmethyl) adipate, butadiene diepoxide, vinylcyclohexene diepoxide, dicyclopentadiene diepoxide, and the like. Especially preferred is 3,4-epoxycyclohexyl-3,4-epoxycyclohexylcarboxylate. The amount of the epoxy added to the mixture is generally at least 0.05 wt.%, specifically from 0.1 to 1 wt.%, more specifically from 0.2 to 0.5 wt.%, each based on the weight of the modified poly(1,4-butylene terephthalate) copolymer.

In another method for the manufacture the modified PBT copolymer, a three-step process is used. In this process, the PET component is (a) depolymerized in the presence of the at least one second polymer, ethylene glycol, propylene glycol, or a combination thereof, under conditions effective to provide a first molten mixture of oligomers containing ethylene terephthalate moieties, oligomers containing ethylene isophthalate groups, oligomers containing diethylene terephthalate groups, oligomers containing diethylene isophthalate groups, oligomers containing trimethylene terephthalate groups, oligomers containing tributylene isophthalate groups, and covalently bonded oligomeric groups containing at least two of the foregoing groups. The first molten mixture further comprises the at least one second polymer, a residue derived from the second polymer, or a combination thereof. Suitable conditions for effecting the depolymerization include a pressure that is at least atmospheric pressure; a temperature from 190°C to 250°C; and an inert atmosphere. The depolymerization of the PET component can be carried out for various times. In one embodiment, the depolymerization is carried out for at least 25 minutes.

In step (b) of the three-step process, 1,4-butanediol is added to the first molten mixture under conditions that are effective to form a second molten mixture containing a component selected from the group consisting of oligomers containing ethylene terephthalate groups, oligomers containing ethylene isophthalate groups, oligomers containing diethylene terephthalate groups, oligomers containing diethylene isophthalate groups, oligomers containing trimethylene terephthalate groups, oligomers containing trimethylene isophthalate groups, oligomers containing butylene terephthalate groups, oligomers containing butylene isophthalate groups, covalently bonded oligomeric moieties containing at least two of the foregoing groups, and combinations thereof. The second molten mixture further comprises the at least one second polymer, a residue derived from the second polymer, or a combination thereof. Suitable conditions for forming the second molten mixture are in a reactor in the presence of a catalyst component at a temperature from 190 °C to 240 °C.

In a subsequent step (c) of the three-step process, the temperature of the molten mixture is raised, and the pressure is decreased to subatmospheric pressure, to form the modified PBT copolymer, comprising polyester units selected from the following formulas (1), (2), (3), (4), (5), (6): 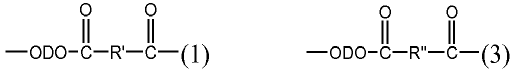 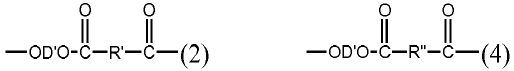 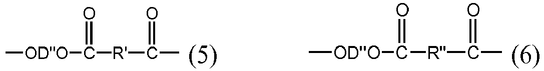 wherein D is 1,4-butylene (-(C₄H₈)-); D' is ethylene (-(C₂H₄)-); D" is 1,2-tripropylene, 1,3-tripropylene, or a combination thereof; R' is terephthalylene (-1,4-(C₆H₄)-); and R" is isophthalylene (-1,3-(C₆H₄)-).

It will be appreciated that the components in the first and second molten mixtures can vary, depending on the diol used in the depolymerization step (a) of the three-step process. When the PET component is depolymerized with ethylene glycol, the first molten mixture contains oligomers containing ethylene terephthalate groups, oligomers containing ethylene isophthalate groups, oligomers containing diethylene terephthalate groups, oligomers containing diethylene isophthalate groups, covalently bonded oligomeric moieties containing at least two of the foregoing groups, ethylene glycol, and combinations thereof. When the PET component is depolymerized with propylene glycol, the first molten mixture contains oligomers containing ethylene terephthalate groups, oligomers containing ethylene isophthalate groups, oligomers containing diethylene terephthalate groups, oligomers containing diethylene isophthalate groups, oligomers containing trimethylene terephthalate groups, oligomers containing trimethylene isophthalate groups, covalently bonded oligomeric moieties containing at least two of the foregoing groups, ethylene glycol, propylene glycol and combinations thereof. The propylene glycol can be either 1,3- or 1,2-propylene glycol, or a combination thereof.

The diol component (ethylene glycol, propylene glycol, and combinations thereof) can be present in step (a) of this three-step embodiment in a molar amount that is at least 25%, or alternatively at least 50% of the amount of ethylene glycol moieties present in the PET component.

The compounds used in the two-step or three-step process can be reused and/or collected as the process proceeds. In one embodiment, the ethylene glycol, propylene glycol, or combination thereof and the 1,4-butanediol are removed and collected in a vessel in step (b). In another embodiment, in step (b), 1,4-butanediol is refluxed back into the reactor and excess 1,4-butanediol, ethylene glycol, propylene glycol, tetrahydrofuran, or combinations thereof is removed. The duration of step (b) can also vary. Step (b) is conducted for a sufficient period of time to reduce at least 65 % of the ethylene glycol from the second molten mixture. In one embodiment, step (b) lasts at least 45 minutes. The pressure at which step (b) is carried out can vary. In one embodiment, step (b) is carried out in atmospheric conditions. In another embodiment, step (b) is carried out in subatmospheric conditions. Different combinations are possible. In one embodiment, step (b) is carried out with excess 1,4-butanediol and at a pressure from 30 kPa to 150 kPa (300 to 1500 mbar) absolute. The 1,4-butanediol used during step (b) can be added in a molar amount that is in excess, e.g., at least 1.1 times molar excess, relative to the molar amount of 1,4-butanediol moieties incorporated into the modified PBT copolymer obtained in step (c). In another embodiment, 1,4-butanediol is used in a molar excess amount from 1.1 to 5.

Step (c) of the three-step process can also be carried out with modifications, depending on the application. In one embodiment, for instance, a component selected from the group of excess 1,4-butanediol, ethylene glycol, propylene glycol, tetrahydrofuran, or a combination thereof is removed during step (c). The pressure at which step (c) is carried out can also vary. In one embodiment, step (c) is carried out at a pressure that is less than 10 mbar.

The three-step process can be carried out in the same reactor. Alternatively, the three-step process can be carried out in at least two reactors.

This three-step process can optionally include the step of adding a basic compound as described above during step (a), step (b), step (c), or a combination thereof, to thereby further reduce THF production. Alternatively, difunctional epoxy compounds can optionally be added during step (b) in the amounts indicated above. Advantageously the three-step process can reduce the amount of THF by at least 30% as compared to the amount of tetrahydrofuran produced by the two-step process that depolymerizes the PET component with 1,4-butanediol instead of ethylene glycol, propylene glycol, or a combination thereof.

A solid-state polymerization step can optionally be used in either of the foregoing processes. The solid-state polymerization generally involves subjecting the modified PBT copolymer formed from the molten mixture to an inert atmosphere or subatmospheric pressure and heating to a temperature for a sufficient period of time to build the molecular weight of the modified PBT copolymer. Generally, the temperature to which the modified PBT copolymer is heated is below the melting point of the modified PBT copolymer, e.g., from 5 to 60°C below the melting point of the modified PBT copolymer. In one embodiment, such a temperature may range from 150 to 210°C. Suitable periods of time during which the solid-state polymerization occurs may range from 2 to 20 hours, depending on the reaction components, conditions, and equipment used. The solid-state polymerization is generally carried out under tumultuous conditions sufficient to promote further polymerization of the modified PBT copolymer to a suitable molecular weight. Such tumultuous conditions may be created by subjecting the modified PBT copolymer to tumbling, the pumping of inert gas into the system to promote fluidization of polymer particle, e.g., pellets, chips, flakes, powder, and the like. The solid-state polymerization can be carried out at atmospheric pressure and/or under reduced pressure, e.g. from 101 kPa to 0.1 kPa (1 atmosphere to 1 mbar).

The modified PBT copolymer formed by the above described methods comprises polyester units having at least one residue that is derived from a PET component. The residue derived from the PET component can be selected from the group consisting of ethylene glycol residues, diethylene glycol residues, isophthalic acid residues, antimony-containing compounds, germanium-containing compounds, titanium-containing compounds, cobalt-containing compounds, tin-containing compounds, aluminum-containing compounds, aluminum, aluminum salts, 1,3-cyclohexanedimethanol isomers, 1,4-cyclohexanedimethanol isomers (including cis-1,3-cyclohexanedimethanol, cis-1,4-cyclohexanedimethanol, trans-1,3-cyclohexanedimethanol, and trans-1,4-cyclohexanedimethanol), alkali salts, alkaline earth metal salts, including calcium, magnesium, sodium and potassium salts, phosphorous-containing compounds and anions, sulfur-containing compounds and anions, naphthalene dicarboxylic acids, 1,3-propanediol groups, and combinations thereof.

Depending on factors such as whether poly(ethylene terephthalate) or poly(ethylene terephthalate) copolymers are used, the residue derived from a PET component can include various combinations. In one embodiment, for instance, the residue includes mixtures of ethylene glycol and diethylene glycol. In another embodiment, the residue includes ethylene glycol, diethylene glycol, isophthalic acid, or combinations thereof. In another embodiment, at least one poly(ethylene terephthalate) residue includes the cis isomer of 1,3-cyclohexanedimethanol, the cis isomer of 1,4-cyclohexanedimethanol, the trans isomer of 1,3-cyclohexanedimethanol, the trans isomer of 1,4-cyclohexanedimethanol, or combinations thereof. In another embodiment, the residue can be a mixture of ethylene glycol, diethylene glycol, isophthalic acid residues, the cis isomer of a cyclohexanedimethanol, the trans isomer of a cyclohexanedimethanol, and combinations thereof. In one embodiment, the residue derived from poly(ethylene terephthalate) includes ethylene glycol, diethylene glycol, cobalt-containing compounds, antimony-containing compounds, isophthalic acid groups, or combinations thereof.

The amount of the ethylene glycol groups (i.e., residues), diethylene glycol groups, and the isophthalic groups in the polymeric backbone of the modified PBT copolymer can vary, and can contain, for example, isophthalic acid groups in an amount that is at least 0.1 mole %, specifically from 0 or 0.1 to 10 mole % (0 or 0.07 to 7 wt.%). The modified PBT copolymer can contain ethylene glycol in an amount that is at least 0.1 mole % and can range from 0.1 to 10 mole % (0.02 to 2 wt.%). In another embodiment, the modified PBT copolymer has an ethylene glycol content that is more than 0.85 wt.%, or alternatively 0.1 to 2 wt.%. The modified PBT copolymer can also contain diethylene glycol in an amount from 0.1 to 10 mole % (0.04 to 4 wt.%). The amount of the butanediol groups is generally about 98 mole % and can vary from 95 to 99.8 mole % in some embodiments. The amount of the terephthalic acid groups is generally about 98 mole % and can vary from 90 to 99.9 mole % in some embodiments. More particularly, the poly(ethylene terephthalate) component residue is selected from the group consisting of ethylene glycol groups, diethylene glycol groups, and cyclohexanedimethanol groups; and the poly(ethylene terephthalate) component residue is in an amount from 0.1 to 10 mole %, based on 100 mole % of glycol in the modified poly(butylene terephthalate) copolymer. The poly(ethylene terephthalate) component residue can further comprise isophthalic acid groups in an amount from 0 to 10 mole%, based on 100 mole% of acid functionality in the modified poly(butylene terephthalate) random copolymer.

Unless otherwise specified, all molar amounts of the isophthalic acid groups and/or terephthalic acid groups are based on the total moles of acid functionality (diacids/diesters) in the composition. Unless otherwise specified, all molar amounts of the butanediol, ethylene glycol, and diethylene glycol groups are based on the total moles of diol in the composition. The weight percent measurements stated above are based on the way terephthalic acid groups, isophthalic acid groups, ethylene glycol groups, and diethylene glycol groups have been defined herein.

The total amount of the poly(ethylene terephthalate) residue in the modified PBT copolymer can vary. For instance, the total amount of the residue can be from 1.8 to 2.5 wt.%, or from 0.5 to 2 wt.%, or from 1 to 4 wt.%. The ethylene glycol, diethylene glycol, and cyclohexane dimethanol groups can be individually or in combination present in an amount from 0.1 to 10 mole %, based on 100 mole % of glycol of the modified PBT copolymer. The isophthalic acid groups can be present in an amount from 0.1 to 10 mole %, based on 100 mole % of diacid/diester in the modified PBT copolymer.

When it is desirable to make a modified PBT copolymer having a melting point (Tm) that is at least 200°C, the total amount of diethylene glycol, ethylene glycol, and isophthalic acid groups can be adjusted to achieve the desired Tm. As such, in one embodiment, the total amount of the diethylene glycol, ethylene glycol, and isophthalic acid groups in the modified PBT copolymer is more than 0 and less than or equal to 23 equivalents, relative to the total of 100 equivalents of diol and 100 equivalents of diacid groups in the modified PBT copolymer. In another embodiment, the total amount of the isophthalic acid groups, ethylene glycol groups, and diethylene glycol groups is from 3 to less than or equal to 23 equivalents, relative to the total of 100 equivalents of diol and 100 equivalents of diacid groups in the modified PBT copolymer. In another embodiment, the total amount of the isophthalic acid groups, ethylene glycol groups, and diethylene glycol groups is from 3 to less than or equal to 10 equivalents, relative to the total of 100 equivalents of diol and 100 equivalents of diacid groups in the modified PBT copolymer. In another embodiment, the total amount of the isophthalic acid groups, ethylene glycol groups, and diethylene glycol groups is from 10 to less than or equal to 23 equivalents, relative to the total of 100 equivalents of diol and 100 equivalents of diacid groups in the modified PBT copolymer. In one embodiment, diethylene glycol, ethylene glycol, and/or isophthalic acid can be added during the process.

The total ethylene glycol groups, isophthalic acid groups, and diethylene glycol groups in the modified PBT copolymer can vary, depending on the application needs. In one embodiment, the composition can have total monomer content selected from the group consisting of ethylene glycol, isophthalic acid groups, and diethylene glycol groups in an amount from more than 0 and less than or equal to 17 equivalents relative to the total of 100 equivalents of diol and 100 equivalents of diacid groups in the modified PBT copolymer. Advantageously, such compositions can maintain useful properties, such as heat deflection temperatures that are more than 80°C.

The total amount of inorganic residues derived from the PET component can be present in amounts from more than 0 parts per million (ppm), up to 1000 ppm, based on parts by weight of the modified PBT copolymer. Examples of such inorganic residues include of antimony-containing compounds, germanium-containing compounds, titanium-containing compounds, cobalt-containing compounds, tin containing compounds, aluminum-containing compounds, aluminum, aluminum salts, alkaline earth metal salts, alkali salts, including calcium, magnesium, sodium and potassium salts, phosphorous-containing compounds and anions, sulfur-containing compounds and anions, and combinations thereof. In another embodiment, the amounts of inorganic residues can be from 250 to 1000 ppm, specifically from 500 to 1000 ppm.

As described above, the at least one second polymer can be a polyvinyl chloride, a polyvinylidene chloride, a polyamide, a polylactic acid, or a combination thereof. The second polymer can potentially also generate residues, including oligomers of polymers, during the depolymerization and/or polymerization steps that can be present in the modified PBT.

Polyamides are a generic family of resins known as nylons, characterized by the presence of an amide group (-C(O)NH-). Nylon-6 and Nylon-6,6 are the generally used polyamides and are available from a variety of commercial sources. Other polyamides, however, such as Nylon-4,6, Nylon-12, Nylon-6,10, Nylon-6,9, Nylon-6/6T and Nylon-6,6/6T with triamine contents below 0.5 wt.%, as well as others, such as the amorphous nylons, may be useful for particular applications. Specific polyamides are Nylon 6 and Nylon-6,6. Nylon-6, for example, is a polymerization product of caprolactam. Nylon-6,6 is a condensation product of adipic acid and 1,6-diaminohexane. Likewise, Nylon-4,6 is a condensation product of adipic acid and 1,4-diaminobutane. Besides adipic acid, other useful diacids for the preparation of Nylons include azelaic acid, sebacic acid, dodecane diacid, as well as terephthalic and isophthalic acids, and the like. Other useful diamines include m-xylyene diamine, di-(4-aminophenyl)methane, di-(4-aminocyclohexyl) methane, 2,2-di-(4-aminophenyl) propane, 2,2-di-(4-aminocyclohexyl) propane, among others. Copolymers of caprolactam with diacids and diamines are also useful. Polyamides that are themselves the product of a recycle process can be used. The polyamide can be present in amounts of more than 0 to less than 5.7 wt.%, more than 0 to less than 4.6 wt.%, more than 0 to less than 2.9 wt.%, or more than 0 to less than 1.45 wt.%, based on the total parts by weight of the poly(ethylene terephthalate) component.

Possible residues from the polyamide include oligomers of polyamide; caprolactam, aminoacid monomers, diamine monomers, triamine monomers, and dicarboxylic acid monomers; monomeric or oligomeric terephthalimides, terephthalamides, isophthalimides, and isophthalamides formed by the condensation reaction of an amine with terephthalic or isophthalic acids or esters; monomeric or oligomeric esters formed by the reaction of ethylene glycol, 1,4-butanediol, propylene glycol, and/or cyclohexanedimethanol with the dicarboxylic acid used in the preparation of the polyamide; and combinations thereof.

Polyvinyl chloride (PVC) and polyvinylidene chloride (PVDC) include homopolymers of the general formulas (7) and (8) respectively, 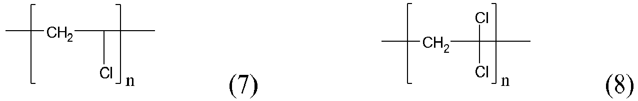 wherein n is the number of repeat units in the polymers, as well as copolymers of PVC and PVDC. Potential residues derived from PVC and PVDC include ene and polyene residues formed by the dehydrochlorination of the PVC and PVDC backbone, ether residues formed by the displacement of the PVC or PVDC chloride groups by ethylene glycol, 1,4-butanediol, and cyclohexanedimethanol, and combinations thereof. The PVC or PVDC can be present in amounts of more than 0 to less than 575 ppm, more than 0 to less than 290 ppm, or more than 0 to less than 115 ppm, based on the total parts by weight of the poly(ethylene terephthalate) component.

Polylactic acid (PLA), an alkyl polyester, includes PLA homopolymers of the general formula (9) 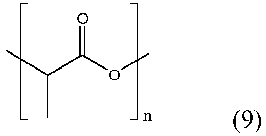 and copolymers thereof. Possible PLA residues include lactide; oligomers of polylactic acid; oligomers containing lactic acid esters with terephthalate groups; oligomers containing lactic acid esters with isophthalate groups; oligomers containing ethylene lactate groups; oligomers containing diethylene lactate groups; oligomers containing propylene lactate groups; oligomers containing trimethylene lactate groups; and covalently bonded oligomeric moieties containing at least two of the foregoing groups, and combinations thereof. The polylactic acid can be present in amounts of more than 0 to 20 wt% or less, based on the poly(ethylene terephthalate) component. In another embodiment, the polylactic acid can be present in amounts of more than 0 to less than 8 wt.%, or more than 0 to less than 5.75 wt.% based on the total parts by weight of the poly(ethylene terephthalate) component.

The physical properties of the modified PBT copolymer can vary, depending on factors such as the performance properties that are required, the equipment used, process parameters, the identity of the second polymer, and the like. The molecular weight of the modified PBT copolymer can be generally at least 3,000 g/mol, specifically from 10,000 to 40,000 g/mol, more specifically from 15,000 to 30,000 g/mol.

The intrinsic viscosity (IV) of the modified PBT can be at least 0.4 dL/g, specifically from 0.5 to 1.3 dL/g, more specifically from 0.4 to 1.2 dL/g. All intrinsic viscosities in this application refer to those viscosities measured in a solution of 60 wt.% phenol and 40 wt.% 1,1,2,2-tetrachloroethane at 25°C.

The melting point of the modified PBT copolymer can be at least 200°C, at least 205°C, or at least 210°C. In another embodiment, the melting point can be from 200°C to 230°C, or from 210°C to 230°C.

The flexural modulus of the modified PBT copolymer can be at least 1000 MPa, specifically from 1000 MPa to 5000 MPa, measured more specifically from 2000 to 2500 MPa, measured in accordance with ASTM 790 or ISO 178. The tensile strength (stress at yield) of the modified PBT can be at least 30 MPa, specifically from 30 MPa to 100 MPa in accordance with ASTM D638. The tensile elongation (at yield) of the modified PBT copolymer is at least 2 % in accordance with ASTM D638.

The tensile elongation (break) of the modified PBT copolymer can be from at least 2%, more particularly 100 to 400%, measured in accordance with ASTM D638. The heat deflection temperature can be 40°C to 120°C, specifically from 40°C to 60°C at 1.82 MPa for 3.2 mm bars, measured in accordance with ASTM D648. The heat deflection temperature can be 40°C to 130°C, specifically from 100°C to 120°C at 0.455 MPa for 3.2 mm bars, measured in accordance with ASTM D648.

The notched Izod strength of the modified PBT copolymer can be at least 20 J/m, measured in accordance with ASTM D256, specifically from 20 J/m to 70 J/m, more specifically from 30 to 70 J/m at 23°C. The unnotched Izod strength of the modified PBT copolymer can be at least 500 J/m, measured in accordance with ASTM D256, specifically from 500 J/m to 3000 J/m, more specifically from 600 to 2500 J/m at 23°C, measured in accordance with ASTM D256.

The properties of the modified PBT copolymer vary depending on the identity of the second polymer used to produce the modified PBT polymer. For example, when the polyvinyl chloride is present in an amount of greater than 0 and less than 290 ppm based on the total parts by weight of the poly(ethylene terephthalate) component, a molded sample of the modified PBT copolymer can have an unnotched Izod strength of 1500 to 2500 J/m, measured in accordance with ASTM D256, and a tensile elongation at break of at least 100%, measured in accordance with ASTM D638. When the second polymer is Nylon 6 in an amount of more than 0 and less than 5.7 wt.%, based on the total weight of the poly(ethylene terephthalate) component, a molded sample of the modified PBT copolymer can have a tensile elongation at break that is at least 100%, measured in accordance with ASTM D638. When the second polymer is Nylon 6 in an amount of more than 0 and less than 1.45 wt.%, based on the total weight of the poly(ethylene terephthalate) component, a molded sample of the modified poly(butylene terephthalate) copolymer can have a heat deflection temperature at 0.455 MPa that is at least 90°C, measured in accordance with ASTM D648. When the second polymer is Nylon 6,6 in an amount of more than 0 and less than 5.7 wt.%, based on the total weight of the poly(ethylene terephthalate) component, a molded sample of the modified poly(butylene terephthalate) copolymer can have a tensile elongation at break that is at least 100%, measured in accordance with ASTM D638. When the second polymer is Nylon 6,6 in an amount of more than 0 and less than 4.6 wt.%, based on the total weight of the poly(ethylene terephthalate) component, a molded sample of the modified poly(butylene terephthalate) copolymer can have a heat deflection temperature at 0.455 MPa that is at least 70°C, measured in accordance with ASTM D648. When the second polymer is polylactic acid in an amount of more than 0 and less than 8 wt.%, based on the total weight of the poly(ethylene terephthalate) component, a molded sample of the modified poly(butylene terephthalate) copolymer can retain at least 50% of its initial tensile elongation at break after hydroaging at 80°C and 100% relative humidity for 24 hours.

In a more specific embodiment, the modified poly(butylene terephthalate) copolymer comprises (a) at least one residue derived from a poly(ethylene terephthalate) component; and (b) a member selected from the group consisting of (i) a second polymer selected from the group consisting of polyvinyl chlorides, polyvinylidene chlorides, polyamides, polylactic acid, and combinations thereof; (ii) at least one residue derived from a polymer selected from the group consisting of polyvinyl chlorides, polyvinylidene chlorides, polyamides, polylactic acid; and combinations thereof; and (iii) combinations thereof; wherein the modified poly(butylene terephthalate) copolymer is derived from a poly(ethylene terephthalate) mixture comprising a second polymer selected from the group consisting of more than 0 to less than 290 ppm polyvinyl chloride, more than 0 to less than 5.7 wt% Nylon 6; more than 0 to less than 5.7 wt% Nylon 6,6; and more than 0 to less than 8 wt% polylactic acid, each based on the parts by weight or weight of the poly(ethylene terephthalate) component; and the residue derived from the poly(ethylene terephthalate) component is selected from the group consisting of ethylene glycol groups, diethylene glycol groups, isophthalic acid groups, antimony-containing compounds, germanium-containing compounds, titanium-containing compounds, cobalt-containing compounds, tin containing compounds, aluminum, aluminum salts, 1,3-cyclohexane dimethanol isomers, 1,4-cyclohexane dimethanol isomers, alkali salts, alkaline earth metal salts, phosphorous-containing compounds and anions, sulfur-containing compounds and anions, naphthalene dicarboxylic acids, 1,3-propanediol groups, and combinations thereof. More specifically, the at least one residue derived from the poly(ethylene terephthalate) component comprises mixtures of ethylene glycol and diethylene glycol.

The modified poly(butylene terephthalate) copolymer generally has an inherent viscosity that ranges from 0.5 to 1.4 dL/g. In one embodiment, the modified poly(butylene terephthalate) copolymer has an inherent viscosity that ranges from 0.5 to 1.2 dL/g. The melting temperature of the modified poly(butylene terephthalate) copolymer is generally at least 200 °C and can range from at least 200 °C to 235 °C. In one embodiment, the melting temperature is at least 210 °C. In one embodiment, the melting temperature of the poly(butylene terephthalate) copolymer can range from 210 °C to 235 °C.

The thermoplastic composition also comprises a polycarbonate. As used herein, the term "polycarbonate" means compositions having repeating structural carbonate units of formula (10) 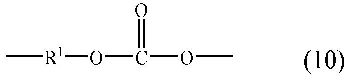 in which at least 60 percent of the total number of R¹ groups contain aromatic moieties and the balance thereof are aliphatic, alicyclic, or aromatic. In an embodiment, each R¹ is a C₆₋₃₀ aromatic group, that is, contains at least one aromatic moiety. R¹ can be derived from an aromatic dihydroxy compound of formula (11) 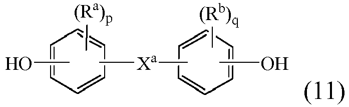 wherein R^{a} and R^{b} each represent a halogen or C₁₋₁₂ alkyl group and can be the same or different; and p and q are each independently integers of 0 to 4. It will be understood that R^{a} is hydrogen when p is 0, and likewise R^{b} is hydrogen when q is 0. Also in formula (11), X^{a} represents a bridging group connecting the two hydroxy-substituted aromatic groups, where the bridging group and the hydroxy substituent of each C₆ arylene group are disposed ortho, meta, or para (specifically para) to each other on the C₆ arylene group. In an embodiment, the bridging group X^{a} is single bond, -O-, -S-, -S(O)-, -S(O)₂-, -C(O)-, or a C₁₋₁₈ organic group. The C₁₋₁₈ organic bridging group can be cyclic or acyclic, aromatic or non-aromatic, and can further comprise heteroatoms such as halogens, oxygen, nitrogen, sulfur, silicon, or phosphorous. The C₁₋₁₈ organic group can be disposed such that the C₆ arylene groups connected thereto are each connected to a common alkylidene carbon or to different carbons of the C₁₋₁₈ organic bridging group. In one embodiment, p and q is each 1, and R^{a} and R^{b} are each a C₁₋₃ alkyl group, specifically methyl, disposed meta to the hydroxy group on each arylene group. In an embodiment, X^{a} is a substituted or unsubstituted C₃₋₁₈ cycloalkylidene, a C₁₋₂₅ alkylidene of formula -C(R^{c})(R^{d}) - wherein R^{c} and R^{d} are each independently hydrogen, C₁₋₁₂ alkyl, C₁₋₁₂ cycloalkyl, C₇₋₁₂ arylalkyl, C₁₋₁₂ heteroalkyl, or cyclic C₇₋₁₂ heteroarylalkyl, or a group of the formula -C(=R^{e})- wherein R^{e} is a divalent C₁₋₁₂ hydrocarbon group. Exemplary groups of this type include methylene, cyclohexylmethylene, ethylidene, neopentylidene, and isopropylidene, as well as 2-[2.2.1]-bicycloheptylidene, cyclohexylidene, cyclopentylidene, cyclododecylidene, and adamantylidene. In another embodiment, X^{a} is a C₁₋₁₈ alkylene group, a C₃₋₁₈ cycloalkylene group, a fused C₆₋₁₈ cycloalkylene group, or a group of the formula -B¹-W-B²- wherein B¹ and B² are the same or different C₁₋₆ alkylene group and W is a C₃₋₁₂ cycloalkylidene group or a C₆₋₁₆ arylene group.

Other exemplary aromatic dihydroxy compounds include compounds of formula (12) 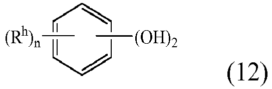 wherein each R^{h} is independently a halogen atom, a C₁₋₁₀ hydrocarbyl such as a C₁₋₁₀ alkyl group, a halogen-substituted C₁₋₁₀ alkyl group, a C₆₋₁₀ aryl group, or a halogen-substituted C₆₋₁₀ aryl group, and n is 0 to 4. The halogen is usually bromine.

Some illustrative examples of specific aromatic dihydroxy compounds include the following: 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'- tetramethylspiro(bis)indane ("spirobiindane bisphenol"), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole, resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like, or combinations comprising at least one of the foregoing dihydroxy compounds.

Specific examples of bisphenol compounds of formula (12) include 1,1-bis(4-hydroxyphenyl) methane, 1,1-bis(4-hydroxyphenyl) ethane, 2,2-bis(4-hydroxyphenyl) propane (hereinafter "bisphenol A" or "BPA"), 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-2-methylphenyl) propane, 1,1-bis(4-hydroxy-t-butylphenyl) propane, 3,3-bis(4-hydroxyphenyl) phthalimidine, 2-phenyl-3,3-bis(4-hydroxyphenyl) phthalimidine (PPPBP), and 1,1-bis(4-hydroxy-3-methylphenyl)cyclohexane (DMBPC). Combinations comprising at least one of the foregoing dihydroxy compounds can also be used. In one specific embodiment, the polycarbonate is a linear homopolymer derived from bisphenol A, in which each of A¹ and A² is p-phenylene and Y¹ is isopropylidene in formula (12).

The polycarbonates can have an intrinsic viscosity, as determined in chloroform at 25°C, of about 0.3 to about 1.5 deciliters per gram (dl/gm), specifically about 0.45 to about 1.0 dl/gm. The polycarbonates can have a weight average molecular weight of about 10,000 to about 200,000 Daltons, specifically about 20,000 to about 100,000 Daltons, as measured by gel permeation chromatography (GPC), using a crosslinked styrenedivinylbenzene column and calibrated to polycarbonate references. GPC samples are prepared at a concentration of about 1 mg per ml, and are eluted at a flow rate of about 1.5 ml per minute.

"Polycarbonates" as used herein include homopolycarbonates, (wherein each R¹ in the polymer is the same), copolymers comprising different R¹ moieties in the carbonate (referred to herein as "copolycarbonates"), copolymers comprising carbonate units and other types of polymer units, such as siloxane units or ester units, and combinations comprising at least one of homopolycarbonates and/or copolycarbonates. As used herein, a "combination" is inclusive of blends, mixtures, alloys, reaction products, and the like.

A specific type of copolymer is a polyester carbonate, also known as a polyester-polycarbonate. Such copolymers further contain, in addition to recurring carbonate chain units of formula (10), repeating units of formula (13) 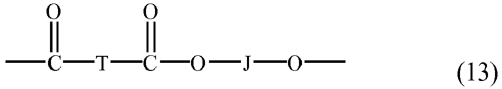 wherein J is a divalent group derived from a dihydroxy compound, and can be, for example, a C₂₋₁₀ alkylene group, a C₆₋₂₀ alicyclic group, a C₆₋₂₀ aromatic group or a polyoxyalkylene group in which the alkylene groups contain 2 to about 6 carbon atoms, specifically 2, 3, or 4 carbon atoms; and T divalent group derived from a dicarboxylic acid, and can be, for example, a C₂₋₁₀ alkylene group, a C₆₋₂₀ alicyclic group, a C₆₋₂₀ alkyl aromatic group, or a C₆₋₂₀ aromatic group. Copolyesters containing a combination of different T and/or J groups can be used. The polyesters can be branched or linear.

In one embodiment, J is a C₂₋₃₀ alkylene group having a straight chain, branched chain, or cyclic (including polycyclic) structure. In another embodiment, J is derived from an aromatic dihydroxy compound of formula (11) above.

Exemplary aromatic dicarboxylic acids that can be used to prepare the polyester units include isophthalic or terephthalic acid, 1,2-di(p-carboxyphenyl)ethane, 4,4'-dicarboxydiphenyl ether, 4,4'-bisbenzoic acid, or a combination comprising at least one of the foregoing acids. Acids containing fused rings can also be present, such as in 1,4-, 1,5-, or 2,6-naphthalenedicarboxylic acids. Specific dicarboxylic acids include terephthalic acid, isophthalic acid, naphthalene dicarboxylic acid, cyclohexane dicarboxylic acid, or a combination comprising at least one of the foregoing acids. A specific dicarboxylic acid comprises a combination of isophthalic acid and terephthalic acid wherein the weight ratio of isophthalic acid to terephthalic acid is about 91:9 to about 2:98. In another specific embodiment, J is a C₂₋₆ alkylene group and T is p-phenylene, m-phenylene, naphthalene, a divalent cycloaliphatic group, or a combination thereof. This class of polyester includes the poly(alkylene terephthalates).

The molar ratio of ester units to carbonate units in the copolymers can vary broadly, for example 1:99 to 99:1, specifically 10:90 to 90:10, more specifically 25:75 to 75:25, depending on the desired properties of the final composition.

In a specific embodiment, the polyester unit of a polyester-polycarbonate is derived from the reaction of a combination of isophthalic and terephthalic diacids (or derivatives thereof) with resorcinol. In another specific embodiment, the polyester unit of a polyester-polycarbonate is derived from the reaction of a combination of isophthalic acid and terephthalic acid with bisphenol A. In a specific embodiment, the polycarbonate units are derived from bisphenol A. In another specific embodiment, the polycarbonate units are derived from resorcinol and bisphenol A in a molar ratio of resorcinol carbonate units to bisphenol A carbonate units of 1:99 to 99:1.

The amount of the polycarbonate (including polyester-polycarbonate) varies with the specific application. Generally, the polycarbonate is present in an amount from 5 to 90 wt.%, based on the total weight of the modified PBT copolymer composition, specifically from to 20 to 70 wt.%.

In addition to the polycarbonates described above, combinations of the modified PBT copolymer with polyesters can be used. Useful polyesters can include, for example, polyesters having repeating units of formula (13), which include poly(alkylene dicarboxylates), liquid crystalline polyesters, and polyester copolymers. The polyesters described herein are generally completely miscible with the polycarbonates when blended.

Useful polyesters can include aromatic polyesters, poly(alkylene esters) including poly(alkylene arylates), and poly(cycloalkylene diesters). Aromatic polyesters can have a polyester structure according to formula (16), wherein J and T are each aromatic groups as described hereinabove. In an embodiment, useful aromatic polyesters can include, for example, poly(isophthalate-terephthalate-resorcinol) esters, poly(isophthalate-terephthalate-bisphenol A) esters, poly[(isophthalate-terephthalate-resorcinol) ester-co-(isophthalate-terephthalate-bisphenol A)] ester, or a combination comprising at least one of these. Also contemplated are aromatic polyesters with a minor amount, e.g., about 0.5 to about 10 weight percent, based on the total weight of the polyester, of units derived from an aliphatic diacid and/or an aliphatic polyol to make copolyesters. Poly(alkylene arylates) can have a polyester structure according to formula (16), wherein T comprises groups derived from aromatic dicarboxylates, cycloaliphatic dicarboxylic acids, or derivatives thereof. Examples of specifically useful T groups include 1,2-, 1,3-, and 1,4-phenylene; 1,4- and 1,5-naphthylenes; cis- or trans-1,4-cyclohexylene; and the like. Specifically, where T is 1,4-phenylene, the poly(alkylene arylate) is a poly(alkylene terephthalate). In addition, for poly(alkylene arylate), specifically useful alkylene groups J include, for example, ethylene, 1,4-butylene, and bis-(alkylene-disubstituted cyclohexane) including cis- and/or trans-1,4-cyclohexanedimethylene. Examples of poly(alkylene terephthalates) include poly(ethylene terephthalate) (PET), poly(1,4-butylene terephthalate) (PBT), and poly(propylene terephthalate) (PPT). Also useful are poly(alkylene naphthoates), such as poly(ethylene naphthanoate) (PEN), and poly(butylene naphthanoate) (PBN). A specifically useful poly(cycloalkylene diester) is poly(cyclohexanedimethylene terephthalate) (PCT). Combinations comprising at least one of the foregoing polyesters can also be used.

Copolymers comprising alkylene terephthalate repeating ester units with other ester groups can also be useful. Specifically useful ester units can include different alkylene terephthalate units, which can be present in the polymer chain as individual units, or as blocks of poly(alkylene terephthalates). Exemplary copolymers of this type include poly(cyclohexanedimethylene terephthalate)-co-poly(ethylene terephthalate), abbreviated as PETG where the polymer comprises greater than or equal to 50 mol% of poly(ethylene terephthalate), and abbreviated as PCTG where the polymer comprises greater than 50 mol% of poly(1,4-cyclohexanedimethylene terephthalate).

Poly(cycloalkylene diester)s can also include poly(cycloalkylene cyclohexanedicarboxylate)s. Of these, a specific example is poly(1,4-cyclohexanedimethylene 1,4-cyclohexanedicarboxylate) (PCCD).

The amount of the additional polyester component that is not the modified PBT copolymer is generally at least 1 wt%, based on the total weight of the modified PBT copolymer composition from 5 wt.% to 90 wt.%.

The composition also includes an impact modifier. The impact modifier component is generally a rubbery material, which when used in suitable amounts, imparts energy absorbing properties to the composition. Suitable rubbery impact modifiers include methacrylate-butadiene-styrene copolymers, acrylate elastomers, acrylonitrile-styrene-acrylate copolymers, high rubber graft acrylonitrile-butadiene-styrene copolymers, acrylate-olefin copolymers, silicone rubbers, silicone-acrylic rubbers (e.g., METABLEN ™ S made by Mitsubishi Rayon), ethylene-propylene non-conjugated diene elastomers, acrylonitrile-styrene-ethylene-propylene non-conjugated diene elastomers, ethylene-methyl methacrylate-glycidyl methacrylate copolymers, and combinations thereof. In one embodiment, the impact modifier is selected from the group consisting of methacrylate-butadiene-styrene copolymers, acrylate elastomers, acrylonitrile-styrene-acrylate rubbers, high rubber graft acrylonitrile-butadiene-styrene copolymers, silicone-acrylic copolymers, and combinations thereof.

Other typical impact modifiers are the following materials, or blends of two or more of these materials: (1) PARALOID EXL3300, which is butyl acrylate-methyl methacrylate core-shell rubber; (2) ASA-HRG, which is acrylonitrile-styrene-butyl acrylate copolymer; (3) AES, which is acrylonitrile-styrene-EPDM copolymer, where EPDM is ethylene-propylene non-conjugated diene elastomer; (4) LOTADER AX8900, which is ethylene-methacrylate-glycidyl methacrylate copolymer with a methacrylate content of around 8%.

The amount of the impact modifier is generally at least 1 wt.% based on the total weight of the composition. In one embodiment, the amount of the impact modifier ranges from 1 wt.% to 50 wt.% based on the total weight of the composition. In another embodiment, the amount of the impact modifier ranges from 5 to 25 wt.% based on the total weight of the composition.

The molding compositions can further optionally include additives, such as nucleating agents such as talc, mica, and sodium stearate, reinforcing agents, flame retardants, heat stabilizers, quenchers, mold release agents, polytetrafluoroethylene, light absorbers, polytetrafluoroethylene-poly(styrene-co-acrylonitrile) mixtures, and combinations thereof. Nucleating agents include and are not limited to polyethylene and polypropylene, phosphate stabilizers, fillers, talc, mica, sodium stearate, and the like. More particularly, a molding composition may further contain a UV modifier. Suitable UV absorber, for example salicylic acid UV absorbers, benzophenone UV absorbers, benzotriazole UV absorbers, cyanoacrylate UV absorbers, and mixtures thereof. Suitable heat stabilizers include, but are not limited to, phenol stabilizers, organic thioether stabilizers, organic phosphite stabilizers, hindered amine stabilizers, epoxy stabilizers, and mixtures thereof.

In one embodiment, the amount of fillers present in the composition is generally less than 5 wt.%, based on the total weight of the composition. In another embodiment, the amount of nucleating agents is generally from 0 to less than 1 wt.%. In another embodiment, the composition includes less than 5 wt.% of a member selected from the group consisting of fillers, nucleating agents, and combinations thereof, based on the weight of the composition.

Exemplary quenchers include phosphoric acid, transition metal phosphates, and other non-acidic species. Specific examples of quenchers include zinc phosphate, monozinc phosphate, calcium phosphate, a solution of 45 % phosphorous acid in water, and combinations thereof. The quencher can be present in an amount from more than 0 to 5000 ppm. The effective quantities of quenching agents are well known in the literature. An effective amount will ordinarily be from 50 to 500 ppm, or more. In one embodiment an effective amount ranges from 1 to 5000 ppm. Quenchers are particularly useful in compositions containing the modified poly(butylene terephthalate) random copolymer, a polycarbonate component, and an impact modifier.

Useful flame retardants include organic compounds that include phosphorus, bromine, and/or chlorine. Non-brominated and non-chlorinated phosphorus-containing flame retardants can be preferred in certain applications for regulatory reasons, for example organic phosphates and organic compounds containing phosphorus-nitrogen bonds.

Exemplary flame retardant aromatic phosphates include triphenyl phosphate, tricresyl phosphate, isopropylated triphenyl phosphate, phenyl bis(dodecyl) phosphate, phenyl bis(neopentyl) phosphate, phenyl bis(3,5,5'-trimethylhexyl) phosphate, ethyl diphenyl phosphate, 2-ethylhexyl di(p-tolyl) phosphate, bis(2-ethylhexyl) p-tolyl phosphate, tritolyl phosphate, bis(2-ethylhexyl) phenyl phosphate, tri(nonylphenyl) phosphate, bis(dodecyl) p-tolyl phosphate, dibutyl phenyl phosphate, 2-chloroethyl diphenyl phosphate, p-tolyl bis(2,5,5'-trimethylhexyl) phosphate, and 2-ethylhexyl diphenyl phosphate. Di- or polyfunctional aromatic phosphorus-containing compounds are also useful, for example resorcinol tetraphenyl diphosphate (RDP), the bis(diphenyl) phosphate of hydroquinone and the bis(diphenyl) phosphate of bisphenol A, respectively, and their oligomeric and polymeric counterparts. Exemplary flame retardant compounds containing phosphorus-nitrogen bonds include phosphonitrilic chloride, phosphorus ester amides, phosphoric acid amides, phosphonic acid amides, phosphinic acid amides, and tris(aziridinyl) phosphine oxide. The phosphorus-containing flame retardants can be present in amounts of more than 0 to 15 wt.% based on total weight of the composition, excluding any filler.

Halogenated materials can also be used as flame retardants, for example bisphenols of which the following are representative: 2,2-bis-(3,5-dichlorophenyl)-propane; bis-(2-chlorophenyl)-methane; bis(2,6-dibromophenyl)-methane; 1,1-bis-(4-iodophenyl)-ethane; 1,2-bis-(2,6-dichlorophenyl)-ethane; 1,1-bis-(2-chloro-4-iodophenyl)ethane; 1,1-bis-(2-chloro-4-methylphenyl)-ethane; 1,1-bis-(3,5-dichlorophenyl)-ethane; 2,2-bis-(3-phenyl-4-bromophenyl)-ethane; 2,6-bis-(4,6-dichloronaphthyl)-propane; and 2,2-bis-(3,5-dichloro-4-hydroxyphenyl)-propane 2,2 bis-(3-bromo-4-hydroxyphenyl)-propane. Other exemplary halogenated materials include 1,3-dichlorobenzene, 1,4-dibromobenzene, 1,3-dichloro-4-hydroxybenzene, and biphenyls such as 2,2'-dichlorobiphenyl, polybrominated 1,4-diphenoxybenzene, 2,4'-dibromobiphenyl, and 2,4'-dichlorobiphenyl as well as decabromo diphenyl oxide, as well as oligomeric and polymeric halogenated aromatic compounds, such as a copolycarbonate of bisphenol A and tetrabromobisphenol A and a carbonate precursor, e.g., phosgene. Metal synergists, e.g., antimony oxide, can also be used with the flame retardant. When present, halogen containing flame retardants can be present in amounts of more than 0 to 15 wt.% based on total weight of the composition, excluding any filler.

Alternatively, the thermoplastic composition can be essentially free of chlorine and bromine. "Essentially free of chlorine and bromine" as used herein is defined as having a bromine and/or chlorine content of less than or equal to 100 parts per million by weight (ppm), less than or equal to 75 ppm, or less than or equal to 50 ppm, based on the total parts by weight of the composition, excluding any filler.

Inorganic flame retardants can also be used, for example salts of C₁₋₁₆ alkyl sulfonate salts such as potassium perfluorobutane sulfonate (Rimar salt), potassium perfluoroctane sulfonate, tetraethylammonium perfluorohexane sulfonate, and potassium diphenylsulfone sulfonate; salts such as Na₂CO₃, K₂CO₃, MgCO₃, CaCO₃, and BaCO₃, or fluoro-anion complexes such as Li₃AlF₆, BaSiF₆, KBF₄, K₃AlF₆, KAlF₄, K₂SiF₆, and/or Na₃AlF₆. When present, inorganic flame retardant salts are present in amounts of 0.01 to 100 parts by weight, more specifically 0.02 to 10 parts by weight, based on 100 parts by weight of the total composition, excluding any filler.

The composition can also optionally comprise from more than 0 to 5 wt.% of a carboxy reactive component. The carboxy-reactive material is a monofunctional or a polyfunctional carboxy-reactive material that can be either polymeric or non-polymeric. Examples of carboxy-reactive groups include epoxides, carbodiimides, orthoesters, oxazolines, oxiranes, aziridines, and anhydrides. The carboxy-reactive material can also include other functionalities that are either reactive or non-reactive under the described processing conditions. Non-limiting examples of reactive moieties include reactive silicon-containing materials, for example epoxy-modified silicone and silane monomers and polymers. If desired, a catalyst or co-catalyst system can be used to accelerate the reaction between the carboxy-reactive material and the polyester.

The term "polyfunctional" or "multifunctional" in connection with the carboxy-reactive material means that at least two carboxy-reactive groups are present in each molecule of the material. Particularly useful polyfunctional carboxy-reactive materials include materials with at least two reactive epoxy groups. The polyfunctional epoxy material can contain aromatic and/or aliphatic residues. Examples include epoxy novolac resins, epoxidized vegetable (e.g., soybean, linseed) oils, tetraphenylethylene epoxide, styrene-acrylic copolymers containing pendant glycidyl groups, glycidyl methacrylate-containing polymers and copolymers, and difunctional epoxy compounds such as 3,4-epoxycyclohexylmethyl-3,4-epoxycyclohexanecarboxylate.

In one embodiment, the polyfunctional carboxy-reactive material is an epoxy-functional polymer, which as used herein include oligomers. Exemplary polymers having multiple epoxy groups include the reaction products of one or more ethylenically unsaturated compounds (e.g., styrene, ethylene and the like) with an epoxy-containing ethylenically unsaturated monomer (e.g., a glycidyl C1-4 (alkyl)acrylate, allyl glycidyl ethacrylate, and glycidyl itoconate).

For example, in one embodiment the polyfunctional carboxy-reactive material is a styrene-acrylic copolymer (including an oligomer) containing glycidyl groups incorporated as side chains. Several useful examples are described in the Innovative Patent Application WO 03/066704 A1, assigned to Johnson Polymer, LLC. These materials are based on copolymers with styrene and acrylate building blocks that have glycidyl groups incorporated as side chains. A high number of epoxy groups per polymer chain is desired, at least about 10, for example, or greater than about 15, or greater than about 20. These polymeric materials generally have a molecular weight greater than about 3000, preferably greater than about 4000, and more preferably greater than about 6000. These are commercially available from Johnson Polymer, LLC under the JONCRYL® trade name, specifically the JONCRYL® ADR 4368 material.

Another example of a carboxy-reactive copolymer is the reaction product of an epoxy-functional C₁₋₄(alkyl)acrylic monomer with a non-functional styrenic and/or C₁₋₄(alkyl)acrylate and/or olefin monomer. In one embodiment the epoxy polymer is the reaction product of an epoxy-functional (meth)acrylic monomer and a non-functional styrenic and/or (meth)acrylate monomer. These carboxy reactive materials are characterized by relatively low molecular weights. In another embodiment, the carboxy reactive material is an epoxy-functional styrene (meth)acrylic copolymer produced from an epoxy functional (meth)acrylic monomer and styrene. As used herein, the term "(meth)acrylic" includes both acrylic and methacrylic monomers, and the term "(meth)acrylate includes both acrylate and methacrylate monomers. Examples of specific epoxy-functional (meth)acrylic monomers include, but are not limited to, those containing 1,2-epoxy groups such as glycidyl acrylate and glycidyl methacrylate.

Suitable C₁₋₄(alkyl)acrylate comonomers include, but are not limited to, acrylate and methacrylate monomers such as methyl acrylate, ethyl acrylate, n-propyl acrylate, i-propyl acrylate, n-butyl acrylate, s-butyl acrylate, i-butyl acrylate, t-butyl acrylate, n-amyl acrylate, i-amyl acrylate, isobornyl acrylate, n-hexyl acrylate, 2-ethylbutyl acrylate, 2-ethylhexyl acrylate, n-octyl acrylate, n-decyl acrylate, methylcyclohexyl acrylate, cyclopentyl acrylate, cyclohexyl acrylate, methyl methacrylate, ethyl methacrylate, n-propyl methacrylate, n-butyl methacrylate, i-propyl methacrylate, i-butyl methacrylate, n-amyl methacrylate, n-hexyl methacrylate, i-amyl methacrylate, s-butyl-methacrylate, t-butyl methacrylate, 2-ethylbutyl methacrylate, methylcyclohexyl methacrylate, cinnamyl methacrylate, crotyl methacrylate, cyclohexyl methacrylate, cyclopentyl methacrylate, 2-ethoxyethyl methacrylate, and isobornyl methacrylate. Combinations comprising at least one of the foregoing comonomers can be used.

Suitable styrenic monomers include, but are not limited to, styrene, alpha-methyl styrene, vinyl toluene, p-methyl styrene, t-butyl styrene, o-chlorostyrene, and mixtures comprising at least one of the foregoing. In certain embodiments the styrenic monomer is styrene and/or alpha-methyl styrene.

In another embodiment, the carboxy reactive material is an epoxy compound having two terminal epoxy functionalities, and optionally additional epoxy (or other) functionalities. The compound can further contain only carbon, hydrogen, and oxygen. Difunctional epoxy compounds, in particular those containing only carbon, hydrogen, and oxygen can have a molecular weight of below about 1000 g/mol, to facilitate blending with the polyester resin. In one embodiment the difunctional epoxy compounds have at least one of the epoxide groups on a cyclohexane ring. Exemplary difunctional epoxy compounds include, but are not limited to, 3,4-epoxycyclohexyl-3,4-epoxycyclohexyl carboxylate, bis(3,4-epoxycyclohexylmethyl) adipate, vinylcyclohexene di-epoxide, bisphenol diglycidyl ethers such as bisphenol-A diglycidyl ether, tetrabromobisphenol-A diglycidyl ether, glycidol, diglycidyl adducts of amines and amides, diglycidyl adducts of carboxylic acids such as the diglycidyl ester of phthalic acid the diglycidyl ester of hexahydrophthalic acid, and bis(3,4-epoxy-6-methylcyclohexylmethyl) adipate, butadiene diepoxide, vinylcyclohexene diepoxide, dicyclopentadiene diepoxide, and the like. Especially preferred is 3,4-epoxycyclohexyl-3,4 epoxycyclohexylcarboxylate.

The difunctional epoxide compounds can be made by techniques well known to those skilled in the art. For example, the corresponding α- or β-dihydroxy compounds can be dehydrated to produce the epoxide groups, or the corresponding unsaturated compounds can be epoxidized by treatment with a peracid, such as peracetic acid, in well-known techniques. The compounds are also commercially available.

Other preferred materials with multiple epoxy groups are acrylic and/or polyolefin copolymers and oligomers containing glycidyl groups incorporated as side chains. Suitable epoxy-functional materials are available from Dow Chemical Company under the trade name D.E.R.332, D.E.R.661, and D.E.R.667; from Resolution Performance Products under the trade name EPON Resin 1001F, 1004F, 1005F, 1007F, and 1009F; from Shell Oil Corporation under the trade names EPON 826, 828, and 871; from Ciba-Giegy Corporation under the trade names CY-182 and CY-183; and from Dow Chemical Co. under the trade name ERL-4221 and ERL-4299. Johnson Polymer Co is a supplier of an epoxy functionalized material known as ADR4368 and 4300. A further example of a polyfunctional carboxy-reactive material is a co- or terpolymer including units of ethylene and glycidyl methacrylate (GMA), sold by Arkema under the trade name LOTADER®.

In still another embodiment, the carboxy-reactive material is a multifunctional material having two or more reactive groups, wherein at least one of the groups is an epoxy group and at least one of the groups is a group reactive with the polyester, but is not an epoxy group. The second reactive group can be a hydroxyl, an isocyanate, a silane, and the like.

Examples of such multifunctional carboxy-reactive materials include materials with a combination of epoxy and silane functional groups, preferably terminal epoxy and silane groups. The epoxy silane is generally any kind of epoxy silane wherein the epoxy is at one end of the molecule and attached to a cycloaliphatic group and the silane is at the other end of the molecule. A desired epoxy silane within that general description is of the following formula: 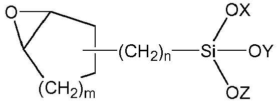 wherein m is an integer of 1, 2 or 3, n is an integer of 1 to 6, inclusive, and X, Y, and Z are the same or different, preferably the same, and are alkyl groups of one to twenty carbon atoms, inclusive, cycloalkyl of four to ten carbon atoms, inclusive, alkylene phenyl wherein alkylene is one to ten carbon atoms, inclusive, and phenylene alkyl wherein alkyl is one to six carbon atoms, inclusive. Desirable epoxy silanes within this range are compounds wherein m is 2, n is 1 or 2, desirably 2, and X, Y, and Z are the same and are alkyl of 1, 2, or 3 carbon atoms inclusive. Epoxy silanes within the range which in particular can be used are those wherein m is 2, n is 2, and X, Y, and Z are the same and are methyl or ethyl.

Such materials include, for example, β-(3,4-epoxycyclohexyl) ethyltriethoxysilane, available under the trade name CoatOSil 1770 from Momentive Performance Materials. Other examples are β-(3,4-epoxycyclohexyl) ethyltrimethoxysilane, available under the trade name Silquest A-186 from Momentive Performance Materials, and 3-glycidoxypropyltriethoxysilane, available under the trade name Silquest Y-15589 from Momentive Performance Materials.

The carboxy-reactive material is added to the polyester compositions in amounts effective to improve visual and/or measured physical properties. In one embodiment, the carboxy-reactive materials are added to the polyester compositions in an amount effective to improve the solvent resistance of the composition, in particular the fuel-resistance of the composition. A person skilled in the art may determine the optimum type and amount of any given carboxy-reactive material without undue experimentation, using the guidelines provided herein.

The type and amount of the carboxy reactive material will depend on the desired characteristics of the composition, the type of polyester used, the type and amount of other additives present in the composition and like considerations, and is generally at least 0.01 weight percent (wt.%) based on the weight of the total composition. In one embodiment, the amount of the carboxy-reactive material is 0.01 to 20 wt.%. In one embodiment, the amount of the carboxy-reactive material is 0.01 to 30 wt.%., or more.

One method of forming a molding composition comprises melt blending the components of any of the compositions comprising the modified PBT. Also disclosed are articles comprising the compositions, for example an, energy absorbers, fuel tanks, and parts for outdoors vehicles such as tractor hoods. A method of forming an article comprises shaping by extruding or molding the melt blended composition to form the article. A method of making thermoformed articles comprises thermoforming any of the compositions comprising the modified PBT to form the thermoformed article.

A more specific example of a molding composition comprises 30 to 90 wt.% of the modified poly(butylene terephthalate) random copolymer; 5 to 40 wt.% of a polycarbonate; more than 0 to 20 wt.% of an impact modifier component, optionally from 0 to 5 wt.% of an additive, and optionally from 0 to 20 wt.% of a flame retardant. The modified poly(butylene terephthalate) copolymer comprises (a) at least one residue derived from a first polymer comprising a poly(ethylene terephthalate) component selected from the group consisting of poly(ethylene terephthalate) homopolymers, poly(ethylene terephthalate) copolymers, and combinations thereof; and (b) a member selected from the group consisting of (i) a second polymer selected from the group consisting of more than 0 to less than 115 ppm of a polyvinyl chloride, more than 0 to less than 115 ppm of a polyvinylidene chloride, more than 0 to less than 2.9 wt.% of a polyamide, more than 0 to less than 5.75 wt.% of a polylactic acid, and combinations thereof, each based on parts by weight or weight of the poly(ethylene terephthalate) component, (ii) at least one residue derived from the second polymer, and (iii) combinations thereof; wherein the residue derived from the poly(ethylene terephthalate) component is selected from the group consisting of ethylene glycol groups, diethylene glycol groups, isophthalic acid groups, antimony-containing compounds, germanium-containing compounds, titanium-containing compounds, cobalt-containing compounds, tin containing compounds, aluminum, aluminum salts, 1,3-cyclohexanedimethanol isomers, 1,4-cyclohexanedimethanol isomers, alkali salts, alkaline earth metal salts, phosphorous-containing compounds and anions, sulfur-containing compounds and anions, naphthalene dicarboxylic acids, 1,3-propanediol groups, and combinations thereof. The additive is selected from the group consisting of heat stabilizers, pentaerythritol, antioxidants, quenchers, mold release agents, polytetrafluoroethylene, light absorbers, polytetrafluoroethylene-poly(styrene-co- acrylonitrile) mixtures, and combinations thereof. In another embodiment, an article comprises the composition.

Another specific example of a molding composition comprises 5 to 90 wt.% of the modified poly(butylene terephthalate) random copolymer; 5 to 40 wt.% of a polycarbonate; more than 0 to 20 wt.% of an impact modifier component, optionally from 0 to 5 wt.% of an additive, and optionally from 0 to 20 wt.% of a flame retardant. The modified PBT copolymer comprises (a) at least one residue derived from a first polymer comprising a poly(ethylene terephthalate) component selected from the group consisting of poly(ethylene terephthalate) homopolymers, poly(ethylene terephthalate) copolymers, and combinations thereof; and (b) a member selected from the group consisting of (i) a second polymer selected from the group consisting of polyvinyl chlorides present in an amount of more than 0 to less than 115 ppm, polyvinylidene chlorides present in an amount of more than 0 to less than 115 ppm, polyamides present in an amount of more than 0 to less than 2.9 wt.%, polylactic acid present in an amount of more than 0 to less than 5.75 wt.%, and combinations thereof, each based on parts by weight or weight of the poly(ethylene terephthalate) component, (ii) at least one residue derived from the second polymer, and (iii) combinations thereof, wherein the residue derived from the poly(ethylene terephthalate) component comprises ethylene glycol groups, diethylene glycol groups, and antimony-containing compounds. In one embodiment, the residue derived from the poly(ethylene terephthalate) component further comprises isophthalic acid.

In another specific example, a molding composition comprises 40 to 70 wt.% of the modified poly(butylene terephthalate) random copolymer; 20to 40 wt.% of a polycarbonate; at least 1 wt.% of an impact modifier component, and optionally from 0 to 5 wt.% of an additive, and optionally from 0 to 20 wt.% of a flame retardant. The modified poly(butylene terephthalate) copolymer is derived from a polymer composite comprising (a) a first polymer comprising a poly(ethylene terephthalate) component selected from the group consisting of poly(ethylene terephthalate) homopolymers, poly(ethylene terephthalate) copolymers, and combinations thereof, and (b) from more than 0 to less than 2.9 wt.% of Nylon 6, based on the weight of the polymer composite. The modified poly(butylene terephthalate) copolymer also comprises a member selected from the group consisting of a residue derived from the poly(ethylene terephthalate) homopolymer, a residue derived from the poly(ethylene terephthalate) copolymer, a residue derived from the Nylon 6, and combinations thereof. The composition has a heat deflection temperature from 85°C to 100°C, measured at 0.455 MPa in accordance with ASTM D648. In one embodiment an article comprises the composition.

In yet another specific example, a molding composition comprises 5 to 90 wt.% of the modified poly(butylene terephthalate) random copolymer; 5 to 90 wt.% of a polycarbonate component; at least 1 wt.% of an impact modifier component, and optionally from 0 to 5 wt.% of an additive. The modified poly(butylene terephthalate) copolymer is derived from a polymer composite comprising (a) a first polymer comprising a poly(ethylene terephthalate) component selected from the group consisting of poly(ethylene terephthalate) homopolymers, poly(ethylene terephthalate) copolymers, and combinations thereof, and (b) from more than 0 to less than 2.9 wt.% of Nylon 6,6, based on the weight of the polymer composite. The modified poly(butylene terephthalate) copolymer also comprises a member selected from the group consisting of a residue derived from the poly(ethylene terephthalate) homopolymer, a residue derived from the poly(ethylene terephthalate) copolymer, a residue derived from the Nylon 6,6, and combinations thereof. The composition has a heat deflection temperature from 85°C to 100°C, measured at 0.455 MPa in accordance with ASTM D648. In one embodiment an article comprises the composition.

Even more specifically, the molding composition comprises 30 to 45 wt.% of the modified PBT, 40 to 60 wt.% of the polycarbonate, wherein the polycarbonate is derived from bisphenol A, and 10 to 20 wt.% of the impact modifier.

The physical properties of the molding composition comprising polycarbonate can also vary depending on factors such as the performance properties that are required, the equipment used, process parameters, the second polymer, and the like.

The flexural modulus of a molded sample of the molding composition comprising polycarbonate can be at least 2000 MPa, specifically from 2000 MPa to 5000 MPa, more specifically from 2000 to 2500 MPa in accordance with ASTM 790 or ISO 178. The tensile strength (stress at yield) of the modified PBT can be at least 30 MPa, specifically from 30 MPa to 100 MPa in accordance with ASTM 638. The tensile elongation (at yield) of the modified PBT copolymer is at least 2 %, more particularly at least 3% in accordance with ASTM 638.

In another embodiment, the tensile elongation (at break) of a molded sample of the molding composition comprising polycarbonate can be from at least 25%, more particularly 50 to 400%, and even more particularly 100 to 400%, in accordance with ASTM 638.

Generally, the heat deflection temperature of a molded sample can be 40°C to 120°C, specifically from 100°C to 120°C at 1.82 MPa for 3.2 mm bars in accordance with ASTM 648. The heat deflection temperature can also be 100°C to 140°C, specifically from 100°C to 120°C at 0.455 MPa for 3.2 mm bars in accordance with ASTM 648.

The notched Izod strength of a molded sample of the of the molding composition comprising polycarbonate can be at least 100 J/m, specifically from 100 J/m to 1200 J/m, more specifically from 500 to 1000 J/m at 23°C in accordance with ASTM D256. The unnotched Izod strength can be at least 1800, more specifically 1800 to 3000 J/m at 23°C in accordance with ASTM D256.

Regarding specific variations on the second polymer, when the modified poly(butylene terephthalate) copolymer is derived from a mixture comprising polyvinyl chloride in an amount from more than 0 and less than 290 ppm, based on the poly(ethylene terephthalate) component, the molded sample of the composition comprising polycarbonate has an unnotched Izod strength of 1500 to 2500 J/m, measured in accordance with ASTM D256. When the modified poly(butylene terephthalate) copolymer is derived from a mixture comprising Nylon 6 in an amount from more than 0 and less than 2.9 wt.%, based on the poly(ethylene terephthalate) component, a molded sample of the composition of the composition comprising polycarbonate has a heat deflection temperature at 0.455 MPa of 90 to 110°C. When the modified poly(butylene terephthalate) copolymer is derived from a mixture comprising Nylon 6,6 in an amount of more than 0 and less than 2.9 wt.%, based on the poly(ethylene terephthalate) component, a molded sample of the composition comprising polycarbonate has a heat deflection temperature at 0.455 MPa of 80 to 110°C. When the modified poly(butylene terephthalate) copolymer is derived from a mixture comprising polylactic acid in an amount from more than 0 and less than 5.75 wt.%, based on the poly(ethylene terephthalate) component, a molded sample of the composition comprising polycarbonate has a heat deflection temperature at 0.455 MPa of 100 to 110°C, and a heat deflection temperature at 1.82 MPa of 80 to 90°C.

The molding compositions can function comparably with those based on PBT, despite using a structurally different material containing isophthalic groups and ethylene glycol groups. Since the molding compositions do not require the conventionally prepared PBT, the invention increases demand for the use of PET and thereby reduces the need to dispose PET scrap in landfills or by incineration.

Further, the process for making the PET-derived random, modified PBT copolymers used in the compositions can advantageously substantially reduce carbon dioxide emissions and solid waste. Since the PET-derived polyester random modified PBT copolymers made by the inventive process are made from scrap PET and not monomers, the process significantly reduces the amount of carbon dioxide emissions and solid waste. Carbon waste reduction (or crude oil savings) occurs because the carbon that constitutes the dimethyl terephthalate or terephthalic acid ordinarily used to make polyesters is not used, rather a PET component, e.g., polyester scrap, is replaced. The process to make DMT or TPA from crude oil is highly energy intensive and as a result, substantial emissions of CO2 to the atmosphere occur from burning of non-renewable energy sources. By not using DMT or TPA to make the modified PBT, carbon dioxide emissions savings are obtained. In one embodiment, the process for making modified PBT can eliminate at least 1 kg of CO₂ emissions for every kilogram of modified PBT made with the process, as compared to a process that makes virgin PBT homopolymers from monomers. In another embodiment, the process for making modified PBT can eliminate from 1 kg to 1.5 kg, or more CO₂ emissions for every kilogram of modified PBT made with the inventive process, as compared to a process that makes virgin PBT homopolymers from monomers. Additionally, there are energy savings/reduced carbon dioxide emissions when the ethylene glycol byproduct is recovered and is used instead of ordinary ethylene glycol in manufacturing.

Additionally, when the source of BDO is from biomass-derived feedstocks such as succinic acid, the carbon dioxide savings are further increased for two reasons. Biomass-derived succinic acid is made from sugars or other bio-derived hydrocarbons that are the derived from atmospheric carbon versus fossil fuel carbon sources, thus reducing the environmental impact of the polymer derived from BDO based on succinic acid from biomass sources. Furthermore, the fermentation to yield succinic acid requires carbon dioxide as an input thus leading to further carbon dioxide reductions.

Advantageously, a molding composition containing the modified poly(butylene terephthalate) random copolymers can have a reduced CO₂ emissions index. The reduced CO₂ emissions index, as defined in this application, is the amount of CO₂, expressed in kg, that is saved when one kg of a composition containing the modified poly(butylene terephthalate) random copolymers is made, as compared to the amount of CO₂, expressed in kg, that is created when the composition is made with poly(butylene terephthalate) that is derived from monomers. Generally, our compositions generally have a reduced CO₂ emissions index that is more than approximately 0.06 kg, and can range from 0.06 kg to 2.25.

The basis for this feature is discussed below. The difference between the amount of CO₂ that is created during ordinary processes for making virgin, monomer-derived PBT and the process for making 1 kg of the modified poly(butylene terephthalate) random copolymers can range from 1.3 kg to 2.5 kg, or more suitably from 1.7 kg to 2.2 kg. It should be noted that this difference is based on calculations for the entire process that starts from crude oil to the monomers to the PBT versus scrap PET to oligomers to the modified PBT. In other words, the process for making 1 kg of the modified poly(butylene terephthalate) random copolymers creates 1.3 to 2.5 kilograms less CO₂ as compared to the process for making 1 kg of virgin PBT from crude oil. To determine the ranges of the reduced CO₂ emissions index for our compositions (which have the modified PBT random copolymers present in an amount from 5 to 90 wt.%), the CO₂ reduction index can be calculated by multiplying the lower amount of the poly(butylene terephthalate) present in the composition, in percentage terms, with 1.3 (0.05 x1.3= 0.065) and the higher amount of the poly(butylene terephthalate) times 2.5. (0.90x 2.5= 2.25).

These results can be derived and verified by using material and energy balance calculations (calculations that are well known in the chemical engineering art) and comparing the amount of energy used to make modified PBT random copolymers from PET and the amount of energy used to make PBT from terephthalic acid.

Advantageously, it is now possible now possible to make molding compositions containing modified poly(butylene terephthalate) copolymer from post consumer and postindustrial poly(ethylene terephthalate) sources that contain other polymers, such as polyvinyl chlorides, polyvinylidene chlorides, polyamides, polylactic acid. This means that it i not necessary to subject post consumer and postindustrial poly(ethylene terephthalate) sources containing other materials to expensive processing steps. Also, it is now possible to make molding compositions with modified poly(butylene terephthalate) copolymers with useful amounts of polyvinyl chlorides, polyvinylidene chlorides, polyamides, polylactic acids.

The modified PBT compositions are further described in the following illustrative examples in which all parts and percentages are by weight unless otherwise indicated.

### EXAMPLES

Table 1 lists the components used in the examples.

**Table 1.**

| Abbreviation | Description | Supplier |
|---|---|---|
| PET | Recycle poly(1,4-ethylene terephthalate) pellets | N/A |
| PBT-1 | Poly(1,4-butylene terephthalate), IV = 0.66 dl/g as measured in a 60:40 wt.% phenol/tetrachloroethane mixture at 25°C | SABIC Innovative Plastics |
| PBT-2 | Poly(1,4-butylene terephthalate), IV = 1.0 dl/g as measured in a 60:40 wt.% phenol/tetrachloroethane mixture at 25°C | SABIC Innovative Plastics |
| PBT-3 | Poly(1,4-butylene terephthalate), IV = 1.2 dl/g as measured in a 60:40 wt.% phenol/tetrachloroethane mixture at 25°C | SABIC Innovative Plastics |
| MBS | Methacrylate-butadiene-styrene emulsion copolymer impact modifier with core-shell structure | SABIC Innovative Plastics |
| Seenox 412S | Thioester, Pentaerythritol tetrakis(3-(dodecylthio)propionate) sold as SEENOX 412-S | Crompton |
| AO | Antioxidant, pentaerythritol tetrakis(3,5-di-tert-butyl-4-hydroxyhydrocinnamate) sold as IRAGANOX™ 1010 | Ciba Geigy |
| Phosphite | Phosphite, 2,4-di-tert-butylphenol phosphite (3:1) sold as IRGAPHOS™ 168 | Ciba Geigy |
| PC-1 | Bisphenol A polycarbonate LEXAN®; Mn by GPC against polystyrene standards = 29 Kg/mol. | SABIC Innovative Plastics |
| PC-2 | Bisphenol A polycarbonate LEXAN®. Mn by GPC against polystyrene standards = 22 Kg/mol. | SABIC Innovative Plastics |
| Phosphorous acid | 45% solution of phosphorous acid in distilled water | N/A |
| PVC | Polyvinyl chloride | N/A |
| TPT | Titanium tetraisopropoxide | Dupont |
| BDO | 1,4-Butanediol | BASF |
| Nylon 6 | - | N/A |
| Nylon 6,6 | - | N/A |
| PLA | Polylactic acid | N/A |

### TEST PROCEDURES

Intrinsic viscosity (IV) was measured in a solution of 60 wt.% phenol and 40 wt.% 1,1,2,2-tetrachloroethane at 25°C.

Melt Volume Rate (MVR) on pellets (dried for 2 hours at 120°C prior to measurement) was measured according to ISO 1133 method at 250°C and 5 kgf at dwelling time of 240 seconds and a 0.0825 inch (2.1 mm) orifice.

Capillary viscosity, which is another indicator of melt-flow was measured by ASTM D3835 or ISO D11433. Dried pellets were extruded through a capillary Rheometer and the force at varied shear rates was determined to estimate the shear viscosity.

Notched Izod impact (NII) strength was measured on 3 x ½ x 1/8 inch (76.2 x 12.7 x 3.2 mm) injection molded bars in accordance with ASTM D256. Bars were notched prior to oven aging, and samples were tested at room temperature (23°C).

Tensile elongation (TE) at break was tested on 7x1/8 in. (177.8 x 3.3 mm) injection molded bars at room temperature with a crosshead speed of 2 in./min (50.8 mm/min) for glass filled samples and 0.2 in/min (5.08 mm/min) for un-filled samples in accordance with ASTM D638.

Flexural properties (flexular modulus, flexular stress at 5% strain, flexular stress at yield) were measured in accordance with ASTM 790.

Biaxial impact testing, sometimes referred to as instrumented impact testing, was performed in accordance with ASTM D3763 using a 4 x 1/8 inch (101.6 x 3.2 mm) molded discs. The total energy absorbed by the sample is reported as ft-lbs or J. Testing was done at room temperature on as molded or oven aged samples.

Heat Deflection Temperature (HDT) was tested on five bars having the dimensions 5 x 0.5 x 0.125 inches (127 x 12.7 x 3.2 mm) in accordance with ASTM D648. The black specks were measured by counting the black specks present visually (with the unaided eye) on the surface of a Dynatup disc having a diameter of approximately 81 cm².

A synopsis of all the relevant tests and test methods is given in Table 2.

**Table 2.**

| Property | Test Standard | Specimen Type | Units |
|---|---|---|---|
| Flexural Tests | ASTM D790 | Bar - 127 x 12.7 x 3.2 mm | MPa |
| HDT | ASTM D648 | Bar - 127 x 12.7 x 3.2 mm | °C |
| Filled Tensile Tests | ASTM D638 | ASTM Type I Tensile bar | MPa |
| N11 at 23°C | ASTM D256 | Bar - 63.5 x 12.7 x 3.2 mm | J/m |
| Multiaxial Impact | ASTM D3763 | Disk - 101.6 mm dia x 3.2 mm thick | J |
| Shrinkage | - | Disk - 101.6 mm dia x 3.2 mm thick | % |
| MVR | ASTM D1238 | Pellets | g/10 min |
| Energy to max load | ASTM D3763 | Disk - 101.6 mm dia x 3.2 mm thick | J |
| Energy to Failure | ASTM D3763 | Disk - 101.6 mm dia x 3.2 mm thick | J |
| Energy Total | ASTM D3763 | Disk - 101.6 mm dia x 3.2 mm thick | J |

### EXAMPLES 1-8. Modified PBT Copolymer Molding Compositions Containing PVC.

Examples 1 to 8 illustrate the properties of the modified PBT copolymer compositions as follows:
Example 1: modified PBT made from PET containing 115 ppm PVC
Example 2: modified PBT made from PET containing 287 ppm PVC
Example 3: modified PBT made from PET containing 575 ppm PVC
Example 4: modified PBT made from PET containing 1150 ppm PVC
Example 5: Impact modified composition made from modified PBT synthesized from PET containing 115 ppm PVC
Example 6: Impact modified composition made from modified PBT synthesized from PET containing 287 ppm PVC
Example 7: Impact modified composition made from modified PBT synthesized from PET containing 575 ppm PVC
Example 8: Impact modified composition made from modified PBT synthesized from PET containing 1150 ppm PVC
Examples 1 and 3 were prepared in a helicone reactor with the capacity of 65 gallons about 200 liters) whereas Examples 2 and 4 were prepared in a helicone reactor with the capacity of 10 gallons (about 40 liters).

The raw materials used to prepare the modified PBT copolymers of Examples 1-4 are summarized in Table 3.

**Table 3.**

| Parameter | Unit | 1 | 2 | 3 | 4 |
|---|---|---|---|---|---|
| Polyester Type | | Recycled PET | Recycled PET | Recycled PET | Recycled PET |
| PVC, based on parts by wt. of PET component | ppm | 115 | 287 | 575 | 1150 |
| BDO:PET Mole Ratio | | 3:1 | 3:1 | 3:1 | 3:1 |
| PET | Kgs | 45.4 | 11.4 | 45.4 | 11.4 |
| BDO | Kgs | 63.6 | 15.9 | 63.6 | 15.9 |
| PVC | gms | 5.2 | 3.25 | 26 | 13 |
| TPT (as elemental Ti) | ppm | 60 | 60 | 60 | 60 |

| | | | | | |
|---|---|---|---|---|---|
| Examples 1 and 3. 200-Liter Pilot Plant Process (BDO:PET = 3:1) | | | | | |

The helicone reactor had a capacity of 200 liters and was equipped with a special design of twin opposing helical blades with 270-degree twist; constructed of 316 stainless steel with 16 g polish finish. The blade speed could be varied from 1 to 65 rpm. The agitators were connected to a Constant Torque Inverter Duty Motor, which operates at 230/460 VAC, 3 PH, and 60 Hz. These agitators provided excellent surface area for the polymer melt in order to build molecular weight. The helicone was also designed with an overhead condenser to condense the vapors in the glycolysis, transesterification (if any) and polymerization stages.

100 lbs (45.4 kg) of recycle PET pellets with 140 lbs (63.6 kg) of butanediol (BDO), (molar ratio 2.9:1) were charged to the helicone reactor. 18.8 ml (60 ppm as Ti) of titanium tetraisopropoxide (TPT) catalyst was also added to the reaction mix. PVC pellets were weighed (5.2 and 26 g respectively for examples 1 and 3) and added to the reactor as well. The temperature of the heating oil (for the helicone) was set to 250°C. The agitator speed was set at 67 % of maximum. The butanediol was refluxed into the reactor for 2 hours. The design of the overhead condenser system did not allow a complete reflux of the butanediol. As a result, about 5 to 10 lbs (2.3 to 4.5 kg) of butanediol evolved in the initial stages could not be refluxed. The butanediol evolved after that could be completely refluxed into the reactor.

For the polymerization stage, a vacuum was applied to the helicone reactor and the reflux of butanediol to the reactor was discontinued. The speed of the agitator was set to 60 % of max and the target amps of the motor were 3.5 amps. The system pressure was brought down to 0.5 Torr (0.066 kPa) by the vacuum blower. The reaction was carried out until the polymer mass reached its 3rd build. The reaction was stopped after 15 minutes into the 3rd build and the polymer was cast in blobs. The products were then allowed to dry and ground into pellets. The following tests were conducted on the polymer sample: IV measurement, NMR analysis, and DSC analysis.

### Examples 2 and 4. 40-Liter Pilot Plant Process (BDO:PET = 3:1).

The helicone reactor had a capacity of 40 liters and was equipped with a special design of twin opposing helical blades with 270 degree twist; constructed of 316 SS with 16g polish finish. The blade speed could be varied from 1 to 65 rpm. The agitators were connected to a 7.5 HP Constant Torque Inverter Duty Motor, which operates at 230/460 VAC, 3 PH, and 60 Hz. These agitators provided excellent surface area for the polymer melt in order to build molecular weight. The helicone was also designed with an overhead condenser to condense the vapors in the glycolysis, transesterification (if any) and polymerization stages.

25 lbs (11.4 kg) of recycle PET pellets with 35 lbs (15.9 kg) of butanediol (molar ratio 2.9:1) were charged to the helicone reactor. 4.6 ml (60 ppm as Ti) of TPT catalyst were also added to the reaction mix. PVC pellets were weighed (3.25 and 13 g respectively for examples 2 and 4) and added to the reactor as well. The temperature of the heating oil (for the helicone) was set to 250°C. The agitator speed was set at 67 % of maximum. The butanediol was refluxed into the reactor for 2 hours. The overhead condenser system did not allow a complete reflux of the butanediol. As a result, about 5 to 10 lbs (2.3 to 4.5 kg) of butanediol evolved in the initial stages could not be refluxed. The butanediol evolved after that could be completely refluxed into the reactor.

For the polymerization stage, a vacuum was applied to the helicone reactor and the reflux of butanediol to the reactor was discontinued. The speed of the agitator was set to 60 % of max and the target amps of the motor were 3.5 amps. The system pressure was brought down to 0.066 kPa (0.5 Torr) by the vacuum blower. The reaction was carried out until the polymer mass reached its 3rd build. The reaction was stopped after 15 minutes into the 3rd build and the polymer was cast in blobs. The products were then allowed to dry and ground into pellets. The logic for changes in agitator speed as the molecular weight of the polymer built up is shown in Table 4.

**Table 4.**

| Stage | Build | Agitator Speed | Target Amp | Rpm |
|---|---|---|---|---|
| Ester Interchange | N/A | 66.7% | N/A | 34 |
| Polymerization | 1^{st} | 60% | 3.5 | 32 |
| | 2^{nd} | 30% | 3.8 | 16 |
| | 3^{rd} | 18% | 4.5 | 9 |

Intrinsic viscosity measurement, NMR analysis, and differential scanning calorimetry (DSC) analysis were conducted on Examples 1 to 4, summarized in Table 5. Comparative Example A is PBT-3, manufactured from its monomers.

**Table 5.**

| Item | Parameter | Unit | Comp. A | 1 | 2 | 3 | 4 |
|---|---|---|---|---|---|---|---|
| PVC, based on PET component | | ppm | - | 115 | 287 | 575 | 1150 |
| DSC Data | Melting Point | °C) | 229.1 | 218.6 | 219.2 | 220.5 | 221.2 |
| | Crystallization Temperature | °C) | 167.3 | 178.6 | 168.4 | 169.7 | 161.1 |
| | Delta H fusion | kJ/kg | 37.9 | 32.5 | 23.6 | 27.8 | 21.6 |
| | Delta H crystallization | kJ/kg | 44.9 | 39.7 | 36.7 | 41.2 | 36.3 |
| Intrinsic Viscosity | IV | Dl/g | 1.0 | 1.13 | 1.06 | 1.04 | 1.12 |
| Composition by NMR analysis based on total diol and diacid units) | Ethylene Glycol (EG) Repeat Unit | Mol% | 0.0 | 0.7 | 1.6 | 0.6 | 0.9 |
| | Diethylene Glycol (DEG) Repeat Unit | Mol% | 0.0 | 0.2 | 0.4 | 0.2 | 0.3 |
| | 1,4-Butanediol (BDO) Repeat Unit | Mol% | 50.0 | 48.8 | 48.4 | 48.9 | 49.1 |
| | Isophthalic Repeat Unit | Mol% | 0.0 | 1.0 | 1.1 | 1.0 | 1.0 |
| | Terephthalic Repeat Unit | Mol% | 50.0 | 49.1 | 49.0 | 48.9 | 50.3 |
| | Total Comonomers | Mol% | 0.0 | 1.9 | 3.1 | 1.8 | 2.2 |
| | Total Comonomer Equivalents | ** | 0.0 | 2.8 | 6.2 | 3.6 | 4.4 |

| | | | | | | | |
|---|---|---|---|---|---|---|---|
| ** Residual equivalents relative to the total of 100 equivalents of diol and 100 equivalents of diacid groups | | | | | | | |

It is evident from the above examples that modified PBT copolymer with a comparable molecular weight to PBT made from monomers can be obtained by the processes describe herein.

The physical and mechanical properties of each of Examples 1 to 4 were also measured, summarized in Table 6.

**Table 6.**

| Property (Units) | Comp. A | 1 | 2 | 3 | 4 |
|---|---|---|---|---|---|
| PVC, based on PET component (ppm) | - | 115 | 287 | 575 | 1150 |
| Modulus of Elasticity (MPa) | 2600 | 2650 | 2830 | 2760 | 2450 |
| Stress at Yield (MPa) | 53.9 | 54.4 | 48.98 | 49.9 | 48.3 |
| Stress at Break (MPa) | 31.5 | 38.7 | 48.1 | 49.6 | 5.18 |
| Tensile Elongation at Yield (%) | 3.4 | 3.2 | 2.8 | 2.8 | 2.6 |
| Tensile Elongation at Break (%) | 390.5 | 331.2 | 2.6 | 3.1 | 2.6 |
| HDT at 0.455 MPa (°C) | 111 | 86.65 | 111.6 | 119.2 | 54.3 |
| HDT at 1.82 MPa (°C) | 46.9 | 43.4 | 47.3 | 48.6 | 44.9 |
| Notched Izod (J/m) | 55.8 | 59.2 | 54.4 | 53.9 | 54.4 |
| Unnotched Izod (J/m) | 1979 | 2090.98 | 623.55 | 720.36 | 947 |
| Flexural Modulus (MPa) | 2350 | 2380 | 2440 | 2460 | 2410 |
| Flexural Stress at 5% Strain (MPa) | 78.6 | 75.7 | 82.4 | 81.8 | 78.6 |
| Flexural Stress at Yield (MPa) | 79.6 | 75.8 | 82.9 | 82.2 | 78.6 |
| Energy to max load (J) | 28.6 | 2.52 | 2.86 | 1.64 | 2.42 |
| Energy to failure (J) | 53.7 | 2.86 | 3.2 | 2.1 | 2.98 |
| Energy Total (J) | 54.3 | 3.72 | 3.6 | 3.3 | 3.02 |
| Max Load (kN) | 3.961 | 1.078 | 1.132 | 0.799 | 0.788 |
| Deflection at max load (mm) | 14 | 4.46 | 4.68 | 4.44 | 6.1 |
| Mold Shrink Parallel (%) | 1.74 | 1.17 | 2.12 | 1.93 | 1.55 |
| Mold Shrink Perpendicular (%) | 1.83 | 1.13 | 2.09 | 1.92 | 1.48 |
| MVR (cc/10 min) | 17.8 | 28.9 | 29.5 | 23.6 | 20.9 |

The above examples demonstrate that the unnotched Izod impact strength and the elongation at break of the modified PBT copolymer samples drop substantially when the PVC concentration in the PET component is above 115 ppm (Examples 3 and 4).

### EXAMPLES 5-8. Impact Modified Molding Compositions.

Modified PBT Examples 1-4 containing PVC impurities were used to prepare the polycarbonate molding compositions Examples 5-8 summarized in Table 7. Comparative Example B was prepared using PBT-3 prepared from monomers. Each composition contained 15.20 wt.% MBS impact modifier based on total weight of the composition.

**Table 7**

| Ingredient (wt.%) | Comp. B | 5 | 6 | 7 | 8 |
|---|---|---|---|---|---|
| PBT-3 | 37.3 % | | | | |
| Example 1 | | 37.3 % | | | |
| Example 2 | | | 37.3 % | | |
| Example 3 | | | | 37.3 % | |
| Example 4 | | | | | 37.3 % |
| PC-1 (PC 105, 100 Grade) | 47.05% | 47.05% | 47.05% | 47.05% | 47.05% |
| Seenox 412S | 0.20% | 0.20% | 0.20% | 0.20% | 0.20% |
| Phosphorus Acid | 0.05% | 0.05% | 0.05% | 0.05% | 0.05% |
| AO | 0.20% | 0.20% | 0.20% | 0.20% | 0.20% |
| MBS | 15.20% | 15.20% | 15.20% | 15.20% | 15.20% |

Examples 5 to 8 were prepared by dry mixing the various ingredients in a tumble dryer and then extruding the mix on a 30 mm twin screw extruder (with a maximum capacity of 75 lbs/hr) having 2 feeders and a vacuum vented mixing screw. The extrusion temperature was usually maintained between 240 and 260°C. The extrudate was cooled through a water bath prior to pelletizing. Test parts were injection molded on a van Dorn molding machine with a set temperature of approximately 240 to 265 °C. The pellets were dried for 3-4 hours at 120°C in a forced air-circulating oven prior to injection molding. All standard parts were 3.12 mm (0.125 inches) thick.

The mechanical properties of Examples 5-8 and Comparative Example B molding compositions are listed in Table 8.

**Table 8.**

| PVC Content/Property (Units) | Comp. B | 5 | 6 | 7 | 8 |
|---|---|---|---|---|---|
| PVC, based on ppm of the PET Component | - | 115 | 287 | 575 | 1150 |
| Modulus of Elasticity (MPa) | 2200 | 2000 | 1970 | 1990 | 1960 |
| Stress at Yield (MPa) | 45 | 48.1 | 48.3 | 48.1 | 47.2 |
| Stress at Break (MPa) | 46 | 39 | 37 | 37.7 | 37.1 |
| Tensile Elongation at Yield (%) | 4 | 4.2 | 4.11 | 4.2 | 4.1 |
| Tensile Elongation at Break (%) | 140 | 79.9 | 56.6 | 59.2 | 67.8 |
| HDT at 0.455 MPa (°C) | 104 | 107.1 | 102.3 | 106.7 | 107.2 |
| HDT at 1.82 MPa (°C) | 83 | 74.6 | 74 | 78.3 | 69.8 |
| Notched Izod (J/m) | 700 | 685 | 668 | 672 | 704 |
| Unnotched Izod (J/m) | | 2080 | 1960 | 2090 | 2110 |
| Flexural Modulus (MPa) | 2000 | 1980 | 2030 | 2050 | 1960 |
| Flexural Stress at Yield (MPa) | 74 | 70.3 | 71.2 | 71.9 | 68.6 |
| Flexural Stress at Break (MPa) | | 71.3 | 71.8 | 72.7 | 69.5 |
| Energy to max load (J) | | 50.3 | 41.4 | 46.1 | 44.2 |
| Energy to failure (J) | | 55.5 | 46 | 51.8 | 48.8 |
| Energy Total (J) | 50 | 55.5 | 46.2 | 51.8 | 48.8 |
| Max Load (kN) | | 4.499 | 4.157 | 4.471 | 4.252 |
| Deflection at max load (mm) | | 20.6 | 18.6 | 19.4 | 19.5 |
| Mold Shrink Parallel (%) | | 0.87 | 0.94 | 0.97 | 0.85 |
| Mold Shrink Perpendicular (%) | | 0.88 | 0.96 | 0.97 | 0.87 |
| Black Specks per surface area of 81 cm² (surface area of Dynatup disk) | 0 | 25 | N/A | >50 | >50 |

The above data demonstrates that a substantial increase in black specs in parts made from the molding composition occurs as the PVC concentration in the PET component is increased beyond 287 ppm (Examples 7 and 8).

### EXAMPLES 9 to 16. Molding Compositions made from modified PBT containing Nylon 6.

Several molding compositions were made from modified PBT resins containing different levels of Nylon 6:
Example 9: modified PBT made from PET containing 1.15 wt.% Nylon 6
Example 10: modified PBT made from PET containing 1.44 wt.% Nylon 6
Example 11: modified PBT made from PET containing 2.9 wt.% Nylon 6
Example 12: modified PBT made from PET containing 5.7 wt.% Nylon 6
Example 13: Impact modified composition made from modified PBT synthesized from PET containing 1.15 wt.% Nylon 6
Example 14: Impact modified composition made from modified PBT synthesized from PET containing 1.44 wt.% Nylon 6
Example 15: Impact modified composition made from modified PBT synthesized from PET containing 2.9 wt.% Nylon 6
Example 16: Impact modified composition made from modified PBT synthesized from PET containing 5.75 wt.% Nylon 6

Examples 9 to 12 (modified PBT) were prepared in a helicone reactor with the capacity of 65 gallons (about 200 liters). Raw material amounts are listed in Table 9.

**Table 9.**

| Parameter | Unit | 9 | 10 | 11 | 12 |
|---|---|---|---|---|---|
| Nylon 6, based on weight of PET component | % | 1.15 | 1.44 | 2.9 | 5.75 |
| PET Type | | Recycled | Recycled | Recycled | Recycled |
| BDO:PET Mole Ratio | | 3:1 | 3:1 | 3:1 | 3:1 |
| PET | Kgs | 45.4 | 45.4 | 45.4 | 45.4 |
| BDO | Kgs | 63.6 | 15.9 | 63.6 | 15.9 |
| Nylon 6 | gms | 520 | 650 | 1300 | 2600 |
| TPT as Ti element | ppm | 60 | 60 | 60 | 60 |

Similar testing protocols were followed for measurement of properties as described above. DSC, IV, and composition data by NMR are shown in Table 10.

**Table 10.**

| Item | (Parameter | Unit | Comp. A | 9 | 10 | 11 | 12 |
|---|---|---|---|---|---|---|---|
| Nylon-6 as % of PET component | | % | - | 1.15 | 1.44 | 2.9 | 5.75 |
| DSC Data | Melting Point | °C | 229.1 | 215.8 | 213.1 | 214.6 | 209.7 |
| | Crystallization Temp | °C | 167.3 | 174.2 | 173 | 173 | 167.9 |
| | Delta H fusion | °C | 37.9 | 32.1 | 32.6 | 31.8 | 33 |
| | Delta H crystallization | kJ/kg | 44.9 | 41.3 | 41.8 | 40.5 | 42.4 |
| IV | | Dl/g | 1.0 | 1.06 | 1 | 0.95 | 0.88 |
| Composition by NMR analysis (based on total diol and diacid units) | EG Repeat Unit | Mol% | 0.0 | 1.4 | 1.9 | 1.4 | 0.7 |
| | DEG Repeat Unit | Mol% | 0.0 | 0.3 | 0.3 | 0.3 | 0.2 |
| | BDO Repeat Unit | Mol% | 50.0 | 48.3 | 47.5 | 47.5 | 46.7 |
| | Isophthalic Repeat Unit | Mol% | 0.0 | 1.1 | 1.2 | 1.1 | 1 |
| | Terephthalic Repeat Unit | Mol% | 50.0 | 49.1 | 49.0 | 48.9 | 50.3 |
| | Total Comonomers | Mol% | 0.0 | 2.8 | 3.4 | 2.8 | 1.9 |
| | Total Comonomer Equiv. | ** | 0.0 | 5.6 | 6.8 | 5.6 | 3.8 |
| | Nylon 6 | Wt.% | | 0.9 | 1.1 | 2.1 | 4.4 |

| | | | | | | | |
|---|---|---|---|---|---|---|---|
| ** Residual Equivalents relative to the total of 100 equivalents of diol and 100 equivalents of diacid groups. | | | | | | | |

It is evident from the above examples that one could make modified PBT with a comparable molecular weight to PBT prepared from monomers. No substantial degradation of the Nylon 6 material was observed in the polymerization process. Surprisingly, the Nylon 6 seems to retain its identity as a separate polymer through the polymerization process. The physical and mechanical properties of Examples 9 to 12 were also measured, Table 11.

**Table 11.**

| Property (Units) | Comp. A | 9 | 10 | 11 | 12 |
|---|---|---|---|---|---|
| Nylon-6, based on PET component (%) | - | 1.15 | 1.44 | 2.9 | 5.75 |
| Modulus of Elasticity (MPa) | 2600 | 2620 | 2660 | 2628 | 2630 |
| Stress at Yield (MPa) | 53.9 | 54.6 | 55.7 | 55.4 | 57.3 |
| Stress at Break (MPa) | 31.5 | 30.6 | 28 | 29.8 | 56.3 |
| Tensile Elongation at Yield (%) | 3.4 | 3.2 | 3.2 | 3 | 3.2 |
| Tensile Elongation at Break (%) | 390.5 | 374.8 | 284.4 | 259.5 | 3.5 |
| HDT at 0.455 MPa (°C) | 111 | 108.6 | 60.8 | 61.3 | 64.5 |
| HDT at 1.82 MPa (°C) | 46.9 | 45.9 | 45.1 | 44.8 | 46.9 |
| Notched Izod (J/m) | 55.8 | 61.2 | 56.8 | 54.3 | 46.6 |
| Unnotched Izod (J/m) | 1979 | 1981 | 2000 | 2130 | 2000 |
| Flexural Modulus (MPa) | 2350 | 2300 | 2350 | 2350 | 2400 |
| Flexural Stress at 5% Strain (MPa) | 78.6 | 73.8 | 77.8 | 77.3 | 82 |
| Flexural Stress at Yield (MPa) | 79.6 | 74 | 77.9 | 77.4 | 82 |
| Energy to max load (J) | 28.6 | 28.7 | 31.6 | 27 | 13.6 |
| Energy to failure (J) | 53.7 | 47.1 | 51.9 | 41.3 | 20.2 |
| Energy Total (J) | 54.3 | 47.4 | 52.4 | 41.8 | 20.3 |
| Max Load (kN) | 3.961 | 3.874 | 4.212 | 3.814 | 2.516 |
| Deflection at max load (mm) | 14 | 14.3 | 15 | 13.4 | 8.94 |
| Mold Shrink Parallel (%) | 1.74 | 1.41 | 1.52 | 1.57 | 1.47 |
| Mold Shrink Perpendicular (%) | 1.83 | 1.36 | 1.48 | 1.54 | 1.44 |
| MVR (cc/10 min) | 17.8 | | 51.5 | 55.3 | 79.8 |

It is seen from the above examples that the heat deflection temperature (at 0.455 MPa) drops substantially in the modified PBT at Nylon 6 concentrations of 1.44 wt.% in the PET component. The examples also show that the tensile elongation at break drops substantially in the modified PBT when the Nylon 6 concentration in the PET component is 5.7 wt.%. Thus, at concentration of 5.7 wt.% Nylon 6 in the PET component, the modified PBT has no commercial use.

Impact modified molding composition Examples 13 to 16 with modified PBT (with Nylon 6 impurities) were prepared on a single screw extruder as described for Examples 5 to 8. The components are listed in Table 12.

**Table 12.**

| Ingredient (wt.%) | Comp. B | 13 | 14 | 15 | 16 |
|---|---|---|---|---|---|
| Nylon-6, as wt.% of PET Component | - | 1.15 | 1.44 | 2.9 | 5.75 |
| PBT-3 | 37.3 % | | | | |
| Example 9 | | 37.3 % | | | |
| Example 10 | | | 37.3 % | | |
| Example 11 | | | | 37.3 % | |
| Example 12 | | | | | 37.3 % |
| PC-1 | 47.05% | 47.05% | 47.05% | 47.05% | 47.05% |
| Seenox 412S | 0.20% | 0.20% | 0.20% | 0.20% | 0.20% |
| Phosphorus Acid | 0.05% | 0.05% | 0.05% | 0.05% | 0.05% |
| AO | 0.20% | 0.20% | 0.20% | 0.20% | 0.20% |
| MBS | 15.20% | 15.20% | 15.20% | 15.20% | 15.20% |

The mechanical properties of molding composition Examples 13 to 16 are reported below in Table 13, along with Comparative Example B.

**Table 13.**

| Property (Units) | Comp. B | 13 | 14 | 15 | 16 |
|---|---|---|---|---|---|
| Nylon - 6 as % of PET component | - | 1.15 | 1.44 | 2.9 | 5.75 |
| Modulus of Elasticity (MPa) | 2200 | 2000 | 2000 | 1990 | 2060 |
| Stress at Yield (MPa) | 45 | 48.4 | 47.8 | 47.7 | 47.4 |
| Stress at Break (MPa) | 46 | 45.4 | 39.4 | 41.6 | 30.6 |
| Tensile Elongation at Yield (%) | 4 | 4.1 | 3.9 | 3.4 | 3.4 |
| Tensile Elongation at Break (%) | 140 | 137.6 | 130.7 | 160.4 | 160.1 |
| HDT at 0.455 MPa (°C) | 104 | 97.8 | 97.6 | 72.1 | 69.2 |
| HDT at 1.82 MPa (°C) | 83 | 67 | 66.5 | 59.9 | 61.4 |
| Notched Izod (J/m) | 700 | 683 | 650 | 644 | 778 |
| Unnotched Izod (J/m) | | 2070 | 2130 | 2115 | 2100 |
| Flexural Modulus (MPa) | 2000 | 1950 | 1960 | 1980 | 2010 |
| Flexural Stress at Yield (MPa) | 74 | 67.6 | 68.8 | 68.7 | 69.1 |
| Flexural Stress at Break (MPa) | | 68.1 | 69.2 | 68.7 | 69.2 |
| Energy to max load (J) | | 51.8 | 49.2 | 45.1 | 42.7 |
| Energy to failure (J) | | 58.2 | 56.8 | 54.1 | 51.7 |
| Energy Total (J) | 50 | 58.2 | 56.8 | 54.1 | 51.7 |
| Max Load (kN) | | 4.488 | 4.4 | 4.162 | 4.03 |
| Deflection at max load (mm) | | 20.8 | 20.1 | 19.8 | 19.1 |
| Mold Shrink Parallel (%) | | 0.67 | 0.74 | 0.57 | 0.51 |
| Mold Shrink Perpendicular (%) | | 0.67 | 0.75 | 0.55 | 0.48 |

It is seen from the above data that a substantial decrease in mechanical properties of the molding composition (such as HDT at 0.455 MPa) is observed when the Nylon 6 concentration is increased above 1.44 wt.% in the PET component (Examples 15 and 16).). As such, when the modified PBT contained Nylon 6 in the amount of 1.44 weight percent, based on the PET component, the composition containing the modified PBT exhibited inferior heat deflection temperature, thereby making the molding composition unsuitable for commercial use.

### EXAMPLES 17 to 20. Molding Compositions made from modified PBT containing Nylon 6,6.

The following compositions were made from modified PBT resins containing different levels of Nylon 6,6. The examples that were generated are as follows:
Example 17: modified PBT made from PET containing 2.9 wt.% Nylon 6,6.
Example 18: modified PBT made from PET containing 4.6 wt.% Nylon 6,6.
Example 19: modified PBT made from PET containing 5.75 wt.% Nylon 6,6.
Example 20: Impact modified molding composition made from modified PBT synthesized from PET containing 2.9 wt.% Nylon 6,6.

Examples 17 and 19 were generated in the 65-gallon helicone reactor, and Example 18 was generated in a 10-gallon helicone reactor as describer above. Raw material amounts are listed in Table 14. The method to conduct this experiment is also similar to that described before.

**Table 14.**

| Parameter | Unit | 17 | 18 | 19 |
|---|---|---|---|---|
| Nylon-6,6 as wt.% of PET Component | % | 2.9 | 4.6 | 5.75 |
| Polyester Type | | Recycled PET | Recycled PET | Recycled PET |
| BDO:PET Mole Ratio | | 3:1 | 3:1 | 3:1 |
| PET Weight | Kgs | 45.4 | 11.4 | 45.4 |
| BDO Weight | Kgs | 63.6 | 15.9 | 63.6 |
| Nylon 6,6 Weight | gms | 1300 | 650 | 2080 |
| TPT as Ti element | ppm | 60 | 60 | 60 |

DSC, IV, and composition data by NMR of Example 17 and Comparative Example A are listed in Table 15.

**Table 15.**

| Item | Parameter | Unit | Comp. A | 17 | 18 | 19 |
|---|---|---|---|---|---|---|
| Nylon-6,6 as % of PET Component | | % | - | 2.9 | 4.6 | 5.75 |
| DSC Data | Melting Point | °C | 229.1 | 215.2 | 210.1 | 206.7 |
| | Crystallization Temp | °C | 167.3 | 164.2 | 168.3 | 148.8 |
| | Delta H fusion | kJ/kg | 37.9 | 23.7 | 32.3 | 24.9 |
| | Delta H crystallization | kJ/kg | 44.9 | 38.6 | 40.8 | 33.4 |
| Intrinsic Viscosity | | Dl/g | 1.0 | 1.0 | 0.84 | 1.00 |
| Composition by NMR analysis based on total diol and diacid units) | EG Repeat Unit | mol% | 0.0 | 0.4 | | 0.9 |
| | DEG Repeat Unit | mol% | 0.0 | 0.2 | | 0.2 |
| | BDO Repeat Unit | mol% | 50.0 | 49.3 | | 47.5 |
| | Isophthalic Repeat Unit | mol% | 0.0 | 1.1 | | 1.1 |
| | Terephthalic Repeat Unit | mol% | 50.0 | 49 | | 48.3 |
| | Total Comonomers | mol% | 0.0 | 1.7 | | 2.2 |
| | Total Comonomer Equivalents | ** | 0.0 | 3.4 | | 4.4 |

| | | | | | | |
|---|---|---|---|---|---|---|
| ** Residual equivalents relative to the total of 100 equivalents of diol and 100 equivalents of diacid groups | | | | | | |

It is evident from the above examples that one could make modified PBT containing Nylon 6,6 with a comparable molecular weight to commercial PBTs. It should also be noted that no substantial degradation of the Nylon 6,6 material was observed in the polymerization process. Surprisingly, the Nylon 6,6 seems to retain its identity as a separate polymer through the polymerization process.

The physical and mechanical properties of Example 17 and Comparative Example A (PBT-3) are shown in Table 16.

**Table 16.**

| Property (Units) | Comp. A | 17 | 18 | 19 |
|---|---|---|---|---|
| Nylon-6,6 as wt.% of PET Component | - | 2.9 | 4.6 | 5.75 |
| Modulus of Elasticity (MPa) | 2600 | 2830 | | 2430 |
| Stress at Yield (MPa) | 53.9 | 50.4 | | 54.6 |
| Stress at Break (MPa) | 31.5 | 40.1 | | 53.3 |
| Tensile Elongation at Yield (%) | 3.4 | 3.1 | | 3.3 |
| Tensile Elongation at Break (%) | 390.5 | 320.6 | | 3.4 |
| HDT at 0.455 MPa (°C) | 111 | 99.1 | 56 | 59 |
| HDT at 1.82 MPa (°C | 46.9 | 48.1 | 43.5 | 42.1 |
| Notched Izod (J/m) | 55.8 | 51.9 | 45.3 | 30.8 |
| Unnotched Izod (J/m) | 1979 | 1780 | 1940 | 1290 |
| Flexural Modulus (MPa) | 2350 | 2400 | 2300 | 2260 |
| Flexural Stress at 5% Strain (MPa) | 78.6 | 81.5 | 74.9 | 72.7 |
| Flexural Stress at Yield (MPa) | 79.6 | 81.9 | 75.1 | 72.9 |
| Energy to max load (J) | 28.6 | 27.6 | | 9.9 |
| Energy to failure (J) | 53.7 | 43.2 | | 10.7 |
| Energy Total (J) | 54.3 | 44 | | 10.7 |
| Max Load (kN) | 3.961 | 3.72 | | 2.4 |
| Deflection at max load (mm) | 14 | 13.4 | | 8.5 |
| Mold Shrink Parallel (%) | 1.74 | 1.8 | | 1.7 |
| Mold Shrink Perpendicular (%) | 1.83 | 1.79 | | 1.6 |
| MVR (cc/10 min) | 17.8 | 55.4 | | 46.3 |

It is seen from the table that the modified PBT has substantial decrease in properties such as HDT at 0.455 MPa and unnotched Izod at 5.75 wt.% nylon-6,6 in the PET component. As such, when the modified PBT contained Nylon 6,6 in the amount of 5.75 weight percent, based on the PET component, the modified PBT exhibited inferior heat deflection temperature and inferior ductility, thereby making the modified PBT undesirable for commercial use.

Impact modified molding composition Example 20, made from Nylon 6,6 containing modified PBT, was prepared on a twin screw extruder as described before, using the ingredients listed in Table 17. The mechanical properties of molding composition Example 18 and Comparative Example B are reported in Table 18.

**Table 17.**

| Ingredient | Comp. B | 20 |
|---|---|---|
| Nylon-6,6 as wt.% of PET component | - | 2.9 |
| PBT-3 | 37.3 % | |
| Example 17 | | 37.3 % |
| PC-1 | 47.05% | 47.05% |
| Seenox 412S | 0.20% | 0.20% |
| Phosphorus Acid | 0.05% | 0.05% |
| AO | 0.20% | 0.20% |
| MBS | 15.20% | 15.20% |

**Table 18.**

| Property (Units) | Comp. B | 20 |
|---|---|---|
| Nylon-6,6 as wt.% of PET component | - | 2.9 |
| Modulus of Elasticity (MPa) | 2200 | 2010 |
| Stress at Yield (MPa) | 45 | 48 |
| Stress at Break (MPa) | 46 | 32.6 |
| Tensile Elongation at Yield (%) | 4 | 3.6 |
| Tensile Elongation at Break (%) | 140 | 25.4 |
| HDT at 0.455 MPa (°C) | 104 | 69.8 |
| HDT at 1.82 MPa (°C) | 83 | 61.5 |
| Notched Izod (J/m) | 700 | 1000 |
| Unnotched Izod (J/m) | | 1930 |
| Flexural Modulus (MPa) | 2000 | 2060 |
| Flexural Stress at Yield (MPa) | 74 | 70 |
| Flexural Stress at Break (MPa) | | 70.1 |
| Energy to max load (J) | | 51.6 |
| Energy to failure (J) | | 63.1 |
| Energy Total (J) | 50 | 63.2 |
| Max Load (kN) | | 4.33 |
| Deflection at max load (mm) | | 21.1 |
| Mold Shrink Parallel (%) | | 0.62 |
| Mold Shrink Perpendicular (%) | | 0.61 |

It is seen from the above data that a substantial decrease in mechanical properties of the molding composition (such as HDT) is observed when the Nylon 6,6 concentration is increased up to 2.9 wt.% in the PET component. As such, when the molding composition containing the modified PBT contained Nylon 6,6 in the amount of 2.9 weight percent, based on the PET component, the molding composition exhibited inferior heat deflection temperature, thereby making the molding composition unsuitable for commercial use.

### EXAMPLES 21 to 24. Molding Compositions made from modified PBT containing polylactic acid (PLA).

Several molding compositions were made from modified PBT resins containing different levels of PLA:
Example 21: Modified PBT made from PET containing 1.44 wt.% PLA.
Example 22: Modified PBT made from PET containing 2.9 wt.% PLA
Example 23: Modified PBT made from PET containing 5.75 wt.% PLA
Example 24: Modified PBT made from PET containing 8 wt.% PLA
Example 25: Impact Modified molding composition made from modified PBT synthesized from PET containing 2.9 wt.% PLA.
Example 26: Impact Modified molding composition made from modified PBT synthesized from PET containing 5.75 wt.% PLA

Examples 21, 23, and 24 were generated in the 65-gallon helicone reactor and example 22 was generated in the 10 gallon reactor as described before. The ingredients are listed in Table 19.

**Table 19.**

| Parameter | Unit | 21 | 22 | 23 | 24 |
|---|---|---|---|---|---|
| PLA (based on the PET Component) | wt% | 1.44 | 2.9 | 5.75 | 8 |
| Polyester Type | - | Recycled PET | Recycled PET | Recycled PET | Recycled PET |
| BDO:PET Mole Ratio | - | 3:1 | 3:1 | 3:1 | 3:1 |
| PET Weight | Kgs | 45.4 | 11.4 | 45.4 | 45.4 |
| BDO Weight | Kgs | 64.6 | 15.9 | 64.6 | 64.6 |
| PLA Weight | g | 654 | 331 | 2590 | 3630 |
| TPT as Ti element | ppm | 60 | 60 | 60 | 60 |

The methods to conduct these experiments are also similar to that described before. DSC, IV, and composition data by NMR of Examples 22, 23, 24, and Comparative Example A (PBT-2) are reported in Table 20.

**Table 20.**

| Item | Parameter | Unit | Comp. A | 22 | 23 | 24 |
|---|---|---|---|---|---|---|
| PLA | PLA (based on PET Component) | Wt.% | N/A | 2.9 | 5.75 | 8 |
| DSC Data | Melting Point | °C | 229.1 | 206.51 | 213.6 | 206.9 |
| | Crystallization Temp | °C | 167.3 | 145.03 | 159.8 | 163.13 |
| | DH fusion | °C | 37.9 | 20.2161 | 25 | 29.17 |
| | DH crystallization | kJ/kg | 44.9 | 31.2356 | 36 | 206.9 |
| Intrinsic Viscosity | | dl/g | 1.0 | 1.19 | 0.949 | 0.97 |

| | | | | | | |
|---|---|---|---|---|---|---|
| ** Residual Equivalents relative to the total of 100 equivalents of diol and 100 equivalents of diacid groups | | | | | | |

It was evident from the above example that one could make modified PBT with a comparable molecular weight to commercial PBTs. The physical and mechanical properties of Examples 21-24 and Comparative Example A are listed in Table 21.

**Table 21.**

| Property (Units) | Comp. A | 21 | 22 | 23 | 24 |
|---|---|---|---|---|---|
| PLA (Wt.% based on the PET Component) | N/A | 1.44 | 2.9 | 5.75 | 8 |
| Modulus of Elasticity (MPa) | 2600 | 2550 | 2760 | 2820 | 2380 |
| Stress at Yield (MPa) | 53.9 | 54.6 | 50.2 | 50.2 | 54.4 |
| Stress at Break (MPa) | 31.5 | 33.3 | 39.1 | 41.6 | 29.1 |
| Elongation at Yield (%) | 3.4 | 3.2 | 3.1 | 3.1 | 3.6 |
| Elongation at Break (%) | 390.5 | 237 | 254.3 | 93.7 | 320.4 |
| HDT at 0.455 MPa (°C) | 111 | 53.2 | 55.6 | 73 | 56.5 |
| HDT at 1.82 MPa (°C) | 46.9 | 44 | 44.1 | 45.3 | 43.4 |
| Notched Izod (J/m) | 55.8 | 41.4 | 55.3 | 58.8 | 42.9 |
| Unnotched Izod (J/m) | 1979 | 2030 | 1590 | 1650 | 2050 |
| Flex Modulus (MPa) | 2350 | 2400 | 2420 | 2360 | 2350 |
| Flex Stress at 5% Strain (MPa) | 78.6 | 77.9 | 78 | 78.3 | 74.4 |
| Flex Stress at Yield (Mpa) | 79.6 | 77.9 | 78.2 | 78.4 | 74.5 |
| Energy to max load (J) | 28.6 | 18.1 | 30.5 | 22.5 | 23.7 |
| Energy to failure (J) | 53.7 | 29.6 | 49.2 | 37.8 | 33.4 |
| Energy Total (J) | 54.3 | 30.2 | 49.6 | 38.3 | 33.7 |
| Max Load (kN) | 3.961 | 2.79 | 4.11 | 3.38 | 3.76 |
| Deflection at max load (mm) | 14 | 10.6 | 14.7 | 12.1 | 13.2 |
| Mold Shrink Parallel (%) | 1.74 | 1.71 | 2.16 | 1.79 | 1.67 |
| Mold Shrink Perpendicular (%) | 1.83 | 1.64 | 2.18 | 1.82 | 1.62 |
| MVR (cc/10 min) | 17.8 | | 12.9 | 35.2 | |

It is seen from the above example that no statistically significant trends in performance was observed for the properties of the modified PBT when the PLA concentration in the PET component was increased up to 8 wt.%.

All the modified PBTs made from PET components containing various PLA amounts exhibited no statistically significant difference in mechanical performance, as compared to the virgin PBT homopolymer. Impact modified molding composition made from PLA containing modified PBT resins, Examples 25 and 26, were prepared using a twin screw extruder as described before, with ingredients listed in Table 22.

**Table 22.**

| Ingredient | Comp. B | 25 | 26 |
|---|---|---|---|
| PLA (wt.% of PET Component) | - | 2.9 | 5.75 |
| PBT-3 | 37.3 % | | |
| Example 22 | | 37.3 % | |
| Example 23 | | | 37.3 % |
| PC-1 (PC 105, 100 Grade) | 47.05% | 47.05% | 47.05% |
| Seenox 412S | 0.20% | 0.20% | 0.20% |
| Phosphorus Acid | 0.05% | 0.05% | 0.05% |
| AP | 0.20% | 0.20% | 0.20% |
| MBS | 15.20% | 15.20% | 15.20% |

The mechanical properties of molding composition Examples 25 and 26 and Comparative Example B are shown reported in Table 23.

**Table 23.**

| Property (Units) | Comp. B | 25 | 26 |
|---|---|---|---|
| PLA as % of PET Component | - | 2.9 | 5.75 |
| Modulus of Elasticity (MPa) | 2200 | | 1990 |
| Stress at Yield (MPa) | 45 | 46.6 | 49 |
| Stress at Break (MPa) | 46 | 36.7 | 39.6 |
| Tensile Elongation at Yield (%) | 4 | 3.6 | 4 |
| Tensile Elongation at Break (%) | 140 | 115.9 | 104.4 |
| HDT at 0.455 MPa (°C) | 104 | 89 | 92.9 |
| HDT at 1.82 MPa (°C) | 83 | 61 | 71.7 |
| Notched Izod (J/m) | 700 | 685 | 670 |
| Unnotched Izod (J/m) | - | 2140 | 1970 |
| Flexural Modulus (MPa) | 2000 | 1950 | 2060 |
| Flexural Stress at Yield (MPa) | 74 | 66.7 | 71.5 |
| Flexural Stress at Break (MPa) | - | 66.8 | 71.8 |
| Energy to max load (J) | - | 45.8 | |
| Energy to failure (J) | - | 51.6 | 55.2 |
| Energy Total (J) | 50 | 51.6 | 55.2 |
| Max Load (kN) | - | 4.301 | 4.483 |
| Deflection at max load (mm) | - | 19.8 | 20 |
| Mold Shrink Parallel (%) | - | 0.7 | 0.85 |
| Mold Shrink Perpendicular (%) | - | 0.73 | 0.87 |

It is seen from the above data that no statistically significant trends in the properties of the molding composition were observed when the PLA concentration is increased up to 5.75 wt.% in the PET component. As such, when the molding composition contained PLA in the amount of up to 5.75 weight percent, based on the PET component, the molding composition exhibited properties that were suitable for commercial use.

## Claims

1. A composition comprising, based on the total weight of the composition:
from 5 to 90 wt% of a modified poly(butylene terephthalate) copolymer, wherein
(i) the modified poly(butylene terephthalate) copolymer is derived from a first polymer comprising a poly(ethylene terephthalate) component selected from the group consisting of poly(ethylene terephthalate) homopolymers, poly(ethylene terephthalate) copolymers, and combinations thereof, in the presence of a second polymer selected from the group consisting of polyvinyl chlorides, polyvinylidene chlorides, polyamides, polylactic acid, and combinations thereof, and wherein
(ii) the modified poly(butylene terephthalate) copolymer comprises (a) at least one poly(ethylene terephthalate) component residue and (b) a member selected from the group consisting of (I) a second polymer selected from the group consisting of polyvinyl chlorides, polyvinylidene chlorides, polyamides, polylactic acid, and combinations thereof, (II) at least one residue derived from the second polymer, and (III) combinations thereof;
from 5 to 90 wt% of a polycarbonate component;
at least 1 wt% of an impact modifier component, and
optionally, from 0 to 5 wt% of at least one additive.

2. The composition of claim 1, wherein the at least one poly(ethylene terephthalate) component residue is selected from the group consisting of mixtures of ethylene glycol, diethylene glycol, isophthalic acid, and combinations thereof.

3. The composition of any of claims 1-2, wherein the second polymer comprises more than 0 to less than 115 ppm of polyvinyl chloride as the second polymer, based on the total parts by weight of the poly(ethylene terephthalate) component.

4. The composition of any of claims 1-3, wherein the second polymer comprises more than 0 to less than 2.9 wt% of a polyamide as the second polymer, based on the total weight of the poly(ethylene terephthalate) component, wherein the polyamide is Nylon 6.

5. The composition of any of claims 1-4, wherein the composition has a heat deflection temperature from 90°C to 110°C, measured at 0.455 MPa in accordance with ASTM D-648.

6. The composition of any of claims 1-5, wherein the second polymer comprises more than 0 to less than 2.9 wt% of a polyamide as the second polymer, based on the total weight of the poly(ethylene terephthalate) component, wherein the polyamide is Nylon 6,6.

7. The composition of any of claims 1-6, wherein the second polymer comprises more than 0 to less than 5.75 wt% of a polylactic acid, based on the total weight of the poly(ethylene terephthalate) component.

8. The composition of claim 1, wherein the polycarbonate comprises units derived from bisphenol A.

9. The composition of claim 1, wherein the impact modifier is selected from the group consisting of methacrylate-butadiene-styrene copolymers, acrylate elastomers, acrylonitrile-styrene-acrylate copolymers, acrylonitrile-butadiene-styrene copolymers, high rubber graft acrylonitrile-butadiene-styrene copolymers, acrylate-olefin copolymers, silicone rubbers, silicone-acrylic rubbers, ethylene-propylene non-conjugated diene elastomers, acrylonitrile-styrene-ethylene-propylene non-conjugated diene elastomers, ethylene-methyl methacrylate-glycidyl methacrylate copolymers, and combinations thereof.

10. A method for the manufacture of a composition, comprising blending the components of the composition of any of claims 1-9.

## Patentansprüche

1. Zusammensetzung, umfassend, basierend auf dem Gesamtgewicht der Zusammensetzung:
zwischen 5 und 90 Gew.-% eines modifizierten Poly(butylenterephthalat)-Copolymers, wobei
(i) das modifizierte Poly(butylenterephthalat)-Copolymer von einem ersten Polymer abgeleitet ist, umfassend eine Poly(ethylenterephthalat)-Komponente, ausgewählt aus der Gruppe, bestehend aus Poly(ethylenterephthalat)-Homopolymeren, Poly(ethylenterephthalat)-Copolymeren und Kombinationen davon, in Gegenwart eines zweiten Polymers, ausgewählt aus der Gruppe, bestehend aus Polyvinylchloriden, Polyvinylidenchloriden, Polyamiden, Polymilchsäure und Kombinationen davon, und wobei
(ii) das modifizierte Poly(butylenterephthalat)-Copolymer (a) mindestens einen Poly(ethylenterephthalat)-Komponentenrückstand und (b) ein Element, ausgewählt aus der Gruppe, bestehend aus (I) einem zweiten Polymer, ausgewählt aus der Gruppe, bestehend aus Polyvinylchloriden, Polyvinylidenchloriden, Polyamiden, Polymilchsäure und Kombinationen davon, (II) mindestens einem Rückstand, abgeleitet von dem zweiten Polymer und (III) Kombinationen davon, umfasst;
zwischen 5 und 90 Gew.-% einer Polycarbonatkomponente; mindestens 1 Gew.-% einer Schlagmodifizierer-Komponente, und optional zwischen 0 und 5 Gew.-% mindestens eines Zusatzstoffes.

2. Zusammensetzung nach Anspruch 1, wobei der mindestens eine Poly(ethylenterephthalat)-Komponentenrückstand aus der Gruppe ausgewählt ist, bestehend aus Gemischen aus Ethylenglycol, Diethylenglycol, Isophthalsäure und Kombinationen davon.

3. Zusammensetzung nach einem der Ansprüche 1 bis 2, wobei das zweite Polymer mehr als 0 bis weniger als 115 ppm von Polyvinylchlorid als das zweite Polymer umfasst, basierend auf den Gesamtgewichtsteilen der Poly(ethylenterephthalat)-Komponente.

4. Zusammensetzung nach einem der Ansprüche 1 bis 3, wobei das zweite Polymer mehr als 0 bis weniger als 2,9 Gew.-% eines Polyamids als das zweite Polymer umfasst, basierend auf dem Gesamtgewicht der Poly(ethylenterephthalat)-Komponente, wobei das Polyamid Nylon 6 ist.

5. Zusammensetzung nach einem der Ansprüche 1 bis 4, wobei die Zusammensetzung eine Wärmeformbeständigkeit von 90 °C bis 110 °C hat, gemessen bei 0,455 MPa gemäß ASTM D-648.

6. Zusammensetzung nach einem der Ansprüche 1 bis 5, wobei das zweite Polymer mehr als 0 bis weniger als 2,9 Gew.-% eines Polyamids als das zweite Polymer umfasst, basierend auf dem Gesamtgewicht der Poly(ethylenterephthalat)-Komponente, wobei das Polyamid Nylon 6,6 ist.

7. Zusammensetzung nach einem der Ansprüche 1 bis 6, wobei das zweite Polymer mehr als 0 bis weniger als 5,75 Gew.-% einer Polymilchsäure umfasst, basierend auf dem Gesamtgewicht der Poly(ethylenterephthalat)-Komponente.

8. Zusammensetzung nach Anspruch 1, wobei das Polycarbonat Einheiten umfasst, die von Bisphenol A abgeleitet sind.

9. Zusammensetzung nach Anspruch 1, wobei der Schlagmodifizierer aus der Gruppe ausgewählt ist, bestehend aus Methacrylat-Butadien-Styren-Copolymeren, Acrylatelastomeren, Acrylnitril-Styren-Acrylat-Copolymeren, Acrylnitril-Butadien-Styren-Copolymeren, Kautschukpfropf-Acrylnitril-Butadien-Styren-Copolymeren mit hohem Kautschukgehalt, Acrylat-Olefin-Copolymeren, Silikonkautschuken, Silikon-Acrylikautschuken, Ethylen-Propylen-Dienelastomeren, nicht-konjugiert; Acrylnitril-Styren-Ethylen-Propylen-Dienelastomeren, nicht-konjugiert; Ethylen-Methyl-Methacrylat-GlycidylMethacrylat-Copolymeren und Kombinationen davon.

10. Verfahren zur Herstellung einer Zusammensetzung, umfassend das Mischen der Komponenten der Zusammensetzung von einem der Ansprüche 1 bis 9.

## Revendications

1. Composition comprenant, sur la base du poids total de la composition :
de 5 à 90 % en poids d'un copolymère modifié de poly(butylène téréphtalate), dans laquelle
(i) le copolymère modifié de poly(butylène téréphtalate) est dérivé d'un premier polymère comprenant un composant de poly(éthylène téréphtalate) choisi dans le groupe consistant en homopolymères de poly(éthylène téréphtalate), copolymères de poly(éthylène téréphtalate), et des combinaisons de ces derniers, en présence d'une deuxième polymère choisi dans le groupe consistant en chlorures de polyvinyle, chlorures de polyvinylidène, polyamides, acide polylactique, et des combinaisons de ces derniers, et dans laquelle
(ii) le copolymère modifié de poly(butylène téréphtalate) comprend (a) au moins un résidu de composant de poly(éthylène téréphtalate) et (b) un membre choisi dans le groupe consistant en (I) un deuxième polymère choisi dans le groupe consistant en chlorures de polyvinyle, chlorures de polyvinylidène, polyamides, acide polylactique, et des combinaisons de ces derniers, (II) au moins un résidu dérivé du deuxième polymère, et (III) des combinaisons de ces derniers ;
de 5 à 90 % en poids d'un composant de polycarbonate ;
au moins 1 % en poids d'un composant de modificateur d'impact, et
optionnellement, de 0 à 5 % en poids d'au moins un additif.

2. Composition selon la revendication 1, dans laquelle le au moins un résidu de composant de poly(éthylène téréphtalate) est choisi dans le groupe consistant en des mélanges de glycol d'éthylène, glycol de diéthylène, acide polylactique, et des combinaisons de ces derniers.

3. Composition selon l'une quelconque des revendications 1-2, dans laquelle le deuxième polymère comprend plus de 0 à moins de 115 ppm de chlorure de polyvinyle en tant que deuxième polymère, sur la base des parties totales en poids du composant de poly(éthylène téréphtalate).

4. Composition selon l'une quelconque des revendications 1-3, dans laquelle le deuxième polymère comprend plus de 0 à moins de 2,9 % en poids d'un polyamide en tant que deuxième polymère, sur la base du poids total du composant de poly(éthylène téréphtalate), dans laquelle le polyamide est le Nylon 6.

5. Composition selon l'une quelconque des revendications 1-4, dans laquelle la composition a une température de fléchissement à la chaleur allant de 90 °C à 110 °C, mesurée à 0,455 MPa selon ASTM D-648.

6. Composition selon l'une quelconque des revendications 1-5, dans laquelle le deuxième polymère comprend plus de 0 à moins de 2,9 % en poids d'un polyamide en tant que deuxième polymère, sur la base du poids total du composant de poly(éthylène téréphtalate), dans laquelle le polyamide est le Nylon 6,6.

7. Composition selon l'une quelconque des revendications 1-6, dans laquelle le deuxième polymère comprend plus de 0 à moins de 5,75 % en poids d'un acide polylactique, sur la base du poids total du composant de poly(éthylène téréphtalate).

8. Composition selon la revendication 1, dans laquelle le polycarbonate comprend des unités dérivées du bisphénol A.

9. Composition selon la revendication 1, dans laquelle le modificateur d'impact est choisi dans le groupe consistant en des copolymères de méthacrylate-butadiène-styrène, des élastomères d'acrylate, des copolymères d'acrylonitrile-styrène-acrylate, des copolymères d'acrylonitrile-butadiène-styrène, des copolymères greffés de caoutchouc à haute teneur d'acrylonitrile-butadiène-styrène, des copolymères d'acrylate-oléfine, du caoutchouc de silicone, du caoutchouc de silicone-acrylique, des élastomères de diène non-conjugués d'éthylène-propylène, des élastomères de diène non-conjugués d'acrylonitrile-styrène-éthylène-propylène, des copolymères de méthacrylate d'éthylène-méthyle méthacrylate-glycidyle, et des combinaisons de ces derniers.

10. Procédé pour la fabrication d'une composition, comprenant le mélange des composants de la composition selon l'une quelconque des revendications 1-9.
